(19) **Europäisches Patentamt / European Patent Office / Office européen des brevets**

(11) **EP 4 575 576 A1**

(12) **EUROPEAN PATENT APPLICATION**

(43) Date of publication:
**25.06.2025 Bulletin 2025/26**

(21) Application number: **23220152.5**

(22) Date of filing: **22.12.2023**

(51) International Patent Classification (IPC):
**G01S 13/90** (2006.01)  **G01S 7/41** (2006.01)

(52) Cooperative Patent Classification (CPC):
**G01S 13/9027; G01S 7/411**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Iceye Oy**
**02150 Espoo (FI)**

(72) Inventors:
• **MAINVIS, Aymeric**
**02150 Espoo (FI)**
• **CARDENAL, Roberto Llop**
**02150 Espoo (FI)**

(74) Representative: **Dentons UK and Middle East LLP**
**One Fleet Place**
**London EC4M 7WS (GB)**

(54) **IDENTIFYING STRUCTURE DAMAGE USING SYNTHETIC APERTURE RADAR**

(57) A method of classifying a structure as a damaged structure using synthetic aperture radar data from one or more space-borne satellites, the method comprising: receiving a plurality of sets of data values, each set of data values representing a radiometric measurement of electromagnetic wave signals returning from an area of interest comprising at least one identified structure, wherein each set of data values is obtained from a different viewing angle to the other sets of data values, each set of data values comprising multiple data entries; determining, using a mathematical estimator, values indicative of a variation in the radiometric measurements for corresponding data entries across the plurality of sets of data values; comparing the determined values to a threshold value wherein, if a majority of determined values corresponding to a first identified structure are less than the threshold value, it is determined that the first identified structure represented by those determined values is an isotropic target; and classifying the first identified structure as a damaged structure in dependence on determining that the first identified structure is an isotropic target.

Receive a plurality of sets of data values, each set of data values representing a radiometric measurement of electromagnetic wave signals returning from an area comprising at least one identified structure, wherein each set of data values is obtained from a different viewing angle to the other sets of data values, each set of data values comprising multiple data entries — S302

Determine, using a mathematical estimator, values indicative of a variation in the radiometric measurements for corresponding data entries across the plurality of sets of data values — S304

Compare the determined values to a threshold value wherein, if a majority of determined values corresponding to a first identified structure are less than the threshold value, it is determined that the first identified structure represented by those determined values is an isotropic target — S306

Classify the first identified structure as a damaged structure in dependence on determining that the first identified structure is an isotropic target — S308

**FIGURE 3**

EP 4 575 576 A1

## Description

The present application relates to a method of classifying a structure such as a building as a damaged building using synthetic aperture radar data from a space-borne satellite.

Background

Synthetic Aperture Radar (SAR) is a form of radar that can be used to image an area on Earth by transmitting radar pulses and recording the return echoes (or signals) from those transmitted beams. SAR systems can be installed on airborne platforms such as aircraft, as well as in satellites operating from space. Various modes of operating the SAR can be used, such as stripmap, spotlight, and ScanSAR (Scanning Synthetic Aperture Radar).

A SAR that is carried on an airborne or space-borne platform typically moves with respect to a ground-based target to be imaged whilst it is imaging that target. As the platform moves, the SAR antenna location relative to the target changes with time. The movement of a relatively small antenna during imaging forms a "synthetic" aperture that can provide similar resolution to much larger antennas, by exploiting the change in frequency of received signals changes due to the Doppler effect.

Data generated from the use of SAR technology can be used to monitor natural disasters, for example by detecting damage to the environment and man-made structures both during and after an event. Using SAR technology for this purpose is advantageous as it can be obtained irrespective of light, weather, cloud and smoke conditions. However, the images taken from space are from a great distance from the surface of the Earth (e.g., 400+ km) and as such it can be challenging to extract sufficient information and detail from such an image to be able to identify and detect whether relatively small structures such as buildings and other human-built objects have experienced significant structural damage.

Summary

The invention is defined by the claims. This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

There is disclosed in the following a method of classifying a structure as a damaged structure using synthetic aperture radar data from one or more space-borne satellites, the method comprising: receiving a plurality of sets of data values, each set of data values representing a radiometric measurement of electromagnetic wave signals returning from an area of interest comprising at least one identified structure, wherein each set of data values is obtained from a different viewing angle to the other sets of data values, each set of data values comprising multiple data entries; determining, using a mathematical estimator, values indicative of a variation in the radiometric measurements for corresponding data entries across the plurality of sets of data values; comparing the determined values to a threshold value wherein, if a majority of determined values corresponding to a first identified structure are less than the threshold value, it is determined that the first identified structure represented by those determined values is an isotropic target; and classifying the first identified structure as a damaged structure in dependence on determining that the first identified structure is an isotropic target.

The plurality of sets of data values may be obtained in a single orbital pass of a single space-borne satellite.

The single space-borne satellite may be mechanically steered while the plurality of sets of data values are being obtained to remain pointing at the area of interest over an extended period of time, and the extended period of time may be 10 seconds or greater.

The plurality of sets of data values may be obtained by the single space-borne satellite in a single acquisition, which is subsequently divided into sub-apertures, each sub-aperture forming one set of the plurality of sets of data values.

The structure may be a building.

The synthetic aperture radar data may be acquired by one or more satellites after the occurrence of an event that may have caused damage to structures within the area of interest.

The plurality of sets of data values may all be acquired by one or more satellites after the occurrence of an event that may have caused damage to structures within the area of interest.

If the majority of determined values corresponding to the first identified structure is greater than the threshold value, it may be determined that the first identified structure represented by that determined value is an anisotropic target, and the method may further comprise classifying the first identified structure as an undamaged structure in dependence on determining that the first identified structure is an anisotropic target.

The method may further comprise performing radiometric calibration on the received plurality of sets of data in order to obtain the radiometric measurements of electromagnetic wave signals from the plurality of sets of data.

The method may further comprise performing filtering of the radiometric measurements of electromagnetic wave signals for each of the plurality of sets of data.

The filtering may be lee speckle filtering.

Using the mathematical estimator may comprise using a statistical mathematical estimator that is selected from a group comprising standard deviation, a correlation coefficient or K-mean clustering.

The statistical mathematical estimator may be the standard deviation, and the standard deviation of radiometric measurements for each data entry may be calculated according to the following equation:

$$\sigma(i,j) = \sqrt{\frac{1}{N}\sum_{n=1}^{N}[\beta_0(i,j,n) - \mu(i,j)]^2}$$

Where $N$ is the number of sets of data, $\beta_0(i, j, n)$ are data values for a data entry, $\sigma$ is the standard deviation and

$$\mu(i,j) = \frac{1}{N}\sum_{n=1}^{N}\beta_0(i,j,n)$$

.

The statistical mathematical estimator may be the standard deviation and the method may further comprise computing a cumulative distribution function of the standard deviation values.

The cumulative distribution function may be calculated according to the following equation:

$$F_\sigma(t) = P(\sigma \le t)$$

The method may further comprise calculating the threshold value.

The calculation of the threshold value may be performed according to the following equation:

$$T = min(t_k, 3)$$

Where $t_k$ is derived from the cumulative distribution function using the relationship $P(X \le t_k) = k,$ wherein $k$ is a probability value.

The method may further comprise generating a pictorial representation of the identified structure, wherein the identified structure is labelled according to a first means if it is classified as a damaged structure.

Labelling the identified structure according to a first means may comprise assigning a first colour to the identified structure in the pictorial representation.

The identified structure may be labelled according to a second means if it is classified as an undamaged structure.

The method may further comprise applying a moving average filter to the cumulative distribution function according to the following equation:

$$\sigma_{block}(i,j) = \sigma(i,j) * g(i,j)$$

The plurality of sets of data values may comprise electromagnetic wave signals obtained using co-polarised radar transmission and reception.

The plurality of sets of data values may comprise electromagnetic wave signals obtained using vertical transmit vertical receive polarisation radar.

The data values of the plurality of sets of data values may be x-band frequency radar readings.

The method may further comprise using a machine learning algorithm to identify a structure to be classified.

The machine learning algorithm may use a K-means clustering technique or a fuzzy C-means clustering technique.

The plurality of sets of data values may comprise 12 or more sets of data values, 24 or more sets of data values or 32 or more sets of data values.

There is also disclosed a computer system configured to classify a structure as a damaged structure using synthetic aperture radar data from one or more space-borne satellites, the computer implemented system being configured to: receive a plurality of sets of data values, each set of data values representing a radiometric measurement of electromagnetic wave signals returning from an area of interest comprising at least one identified structure, wherein each set of data values is obtained from a different viewing angle to the other sets of data values, each set of data values comprising multiple data entries; determine, using a mathematical estimator, values indicative of a variation in the radiometric measurements for corresponding data entries across the plurality of sets of data values; compare the determined values to a threshold value wherein, if a majority of determined values corresponding to a first identified structure are less than the threshold value, it is determined that the first identified structure represented by those determined value is an isotropic target; and classify the first identified structure as a damaged structure in dependence on determining that the first identified structure is an isotropic target.

There may be provided a computer system configured to perform the method described above.

There may be provided computer readable code configured to cause the method described above to be performed when the code is run.

The methods described herein may be performed by software in machine readable form on a tangible storage medium e.g., in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

Brief Description of the Drawings

Examples of the invention will be described, by way of example, with reference to the following drawings, in which:

Figure 1A illustrates diagrammatically a SAR satellite sending and receiving radar pulses from a building in an area of interest;

Figure 1B illustrates diagrammatically a SAR satellite using an extended spotlight mode in order to maintain pointing at a target as it travels in the azimuth direction.

Figures 2A illustrates diagrammatically how radar reflections from angular targets such as buildings can vary when the target is viewed from different angles.

Figure 2B illustrates diagrammatically the relationship between building damage status and the scattering and/or reflection of radar pulses;

Figure 3 illustrates a first method of classifying a structure (e.g., a building) as a damaged structure;

Figure 4 illustrates a detailed exemplary method of classifying a structure (e.g., a building) as a damaged structure;

Figure 5 illustrates a set of images that may be used to classify a structure as a damaged or an undamaged structure;

Figure 6 illustrates a first intermediate data set that may be generated by the method illustrated in figures 3 and 4;

Figure 7 illustrates a second intermediate data set that may be generated by the method illustrated in figure 3;

Figure 8 illustrates a third intermediate data set that may be generated by the method illustrated in figure 3;

Figure 9 illustrates an exemplary detection map that may be generated by the method illustrated in figure 3;

Figure 10A is a zoomed-in SAR image of an area with damaged and undamaged buildings.

Figure 10B is a zoomed-in detail image of the first intermediate data set of Figure 6, showing damaged and undamaged buildings.

Figure 10C is a zoomed-in detail image of an area of the detection map of Figure 9 showing damaged and undamaged buildings.

Figure 10D is a zoomed-in detail image of an area of a detection map generated using block-based detection with an averaging window.

Figure 11 shows a computing system on which any of the above-described methods may be performed.

Detailed Description

Examples of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

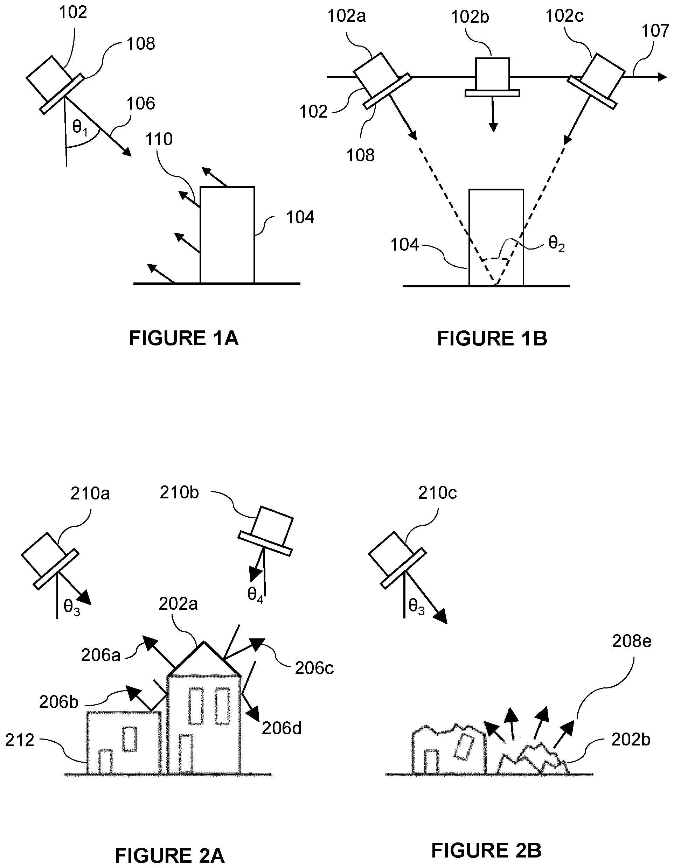

Figure 1A shows a SAR satellite 102 that is configured to monitor a structure in the form of identified building 104. Figure 1A is clearly not to scale since in reality the satellite is far above the building in space, for example in low Earth orbit, and in some examples the satellite 102 could be small enough to fit inside a room inside building 104. The diagram is intended to show diagrammatically the angular relationship between SAR satellite 102 and building 104. The satellite 102 in figure 1A is illustrated travelling in a direction that extends into the page and is observing a target in a plane that is parallel to the page. Figure 1A illustrates that satellites with a SAR payload will typically operate in a side-looking configuration, meaning that the as the satellite travels in a direction into the page, its SAR antenna is pointed to the side at an angle $\theta_1$, known in the art as the look angle, rather than straight down. This is because pointing straight down at the nadir (the point on Earth directly beneath the satellite) can result in too strong of a large direct radar reflection, thereby swamping out the backscattered radar energy and making the formation of an image impossible. To deal with this situation, SAR satellites are typically side-looking to avoid this large direct reflection, with a look angle of 10 or more degrees, and with 10 to 40 degrees being a typical range. This is in direct contrast to most satellites that capture optical imagery, which can be acquired looking straight down. Due to its side-looking nature, most of the radar "echoes" received by the SAR satellite and used to form a SAR image are made up of backscattered energy, although small reflections from certain targets can also be used advantageously for calibration, as well as for helping to detect damaged versus undamaged buildings, as will be described in the examples below.

The satellite 102 may be a micro satellite. The satellite comprises a body or "bus". The body of the satellite may be partially enclosed, for example to house and protect components of the satellite. The satellite may further comprise one or more batteries housed within the body, and one or more solar panels mounted on the outside of the body. Various classes of satellites are currently in orbit around the Earth, generally defined by ranges of weights, although the boundaries between the classes are somewhat fluid and arbitrary:

Cube satellites: 1 kg - 10 kg
Micro satellites: 50 kg - to 250 kg
Small satellites: 500 kg
Regular satellites: 800 - 1200 kg.

A satellite having a low mass has a much lower moment of inertia than traditional larger SAR satellites that are typically over 1000 kg or more, providing it with greater mobility and agility that is beneficial to obtaining SAR imagery suitable for classifying buildings as either damaged or undamaged according to the examples described herein. A suitably low mass for a small agile satellite may be, for example, under 800Kg, under 500Kg, under 250Kg, between 50 Kg and 250 Kg, or under 100 kg.

In an example, the satellite 102 of figure 1A is orbiting Earth in a low Earth orbit. A low Earth orbit can be from 160 km to 1000 km above the surface of the Earth. Examples of Earth Observation (EO) satellites based on SAR can have orbits of between 450 km and 650 km above the Earth. In an example according to the current invention, a satellite has an orbit that is 550 km above the Earth's surface. At an orbit of 550 km above the Earth, for example, the satellite is effectively traversing the ground at about 7.5 km/s, or 27,000 km/h. Most satellites in this this orbit will traverse the Earth at a speed that is, for example, in the range of 7-8 km/s.

The SAR satellite 102 comprises at least one radar antenna, or sensor, which is configured to transmit and receive radar pulses. The sensors form part of what is known in the art as the satellite "payload" 108. The number and variety of sensors may vary according to the intended use of the satellite. In some examples, the SAR payload may comprise a phased array antenna or a reflector antenna. The radar pulses may otherwise be referred to as radar waves, or radar signals. The radar pulses are electromagnetic waves that are reflected or scattered by targets in their path. In some examples, the radar pulses may be radio waves or microwaves. Broadly speaking, the SAR satellite 102 is comprises an antenna that transmits radar pulses down to Earth and then receives the signals that are returned, or backscattered, from the Earth's surface from those beams. The SAR payload 108 of figure 1A is configured to transmit radar pulses 106 towards the identified building 104. The transmitted radar pulses 106 may otherwise be described as incoming beams, or incident beams, as they are beams from the SAR that cover the area of the building. The transmitted radar pulses 106 may be transmitted at an initial angle, otherwise known as the look angle, $\theta_1$. The look angle $\theta_1$ is the angle between a radar pulse and a line that extends directly down from the satellite to its nadir on Earth. The "look angle" can sometimes also be referred to as the angle of incidence. However, the angle of incidence is the angle is typically known as the angle between the incident radar beam and a line normal to the to the point on Earth where the radar beam hits. As such, if the Earth is flat at that point, the angle of incidence is the same as the look angle, but this is not always the case, for example if the target is the side of a steep mountain, or if the target has large angular sides, such as the side of a building, for example. A viewing angle refers to a direction that the target is being viewed from, and is determined by the position of the satellite, the look angle, and the squint angle (forwards or backwards looking) of the satellite.

A building 104 may be defined as a man-made structure that has a roof and walls. The building 104 may be called an "identified" building because, prior to the acquisition of SAR data, it has been identified as a building via a suitable means. The suitable means may be, for example, previously obtained SAR data or by any other spatial, spectral, temporal, radiometric or geometric imaging technique, and/or through the use of digital surface models and/or building footprint information. Whilst the disclosure described herein relates to classifying damaged buildings, it would be understood that the invention may also be used to classify other man-made structures such as water towers and bridges as being damaged or undamaged. The identified building may be located within an area of interest, which is a geographical area that has been selected for imaging. The geographical area may contain more than one building (i.e., a plurality of buildings) or structures. The geographical area may also contain other natural features such as forests, fields, water, etc.

When the radar pulses 106 intersect the identified building, they may be reflected off of and/or scattered by the building. Scattering occurs when the energy of the radar beam is scattered in all directions when it hits a surface, similar to how light is scattered on a surface coated with low-gloss matte paint. As shown in figure 1A, some of the energy will be scattered back to satellite 102, where it will be detected by the antenna of the SAR payload 108. Reflected beams may or may not be reflected back to the SAR antenna, depending on the angle of incidence and the geometry of the object (e.g., building 104) that reflects the beam.

The SAR signal from an object that is received by the SAR satellite 102 typically comprises a mixture of both scattered and reflected SAR energy. The radar energy that is scattered and reflected from the surface of the building may be referred to as radar echoes, the SAR signal, returning radar energy, or returning radar beams 110. The returning beams 110 shown in Figure 1A are scattered and reflected from the surface of the building 104 and the surrounding area in the right direction to return to and be captured by the SAR antenna while it is in receive mode. The resulting SAR signal can then be processed using techniques known in the art of SAR processing to create an image comprising the amplitude of the returned energy and the phase for each pixel of the image. Objects are located in the image based on measuring how long it takes for the transmitted radar pulse to travel from the SAR satellite to the object and then back again.

Reflected energy generally results in a higher intensity return because the energy is more concentrated in a certain direction, meaning the pixel that contains a high amount of reflected energy can show up to be quite bright. The phenomenon of scattering typically results in in a much lower strength of radar signal that is returned to/received by the satellite from a target because only a fraction of the energy transmitted in the incident beam is scattered in the right direction to be received by SAR antenna. The strength of returning radar signals may be used to identify objects and materials that are observed by the satellite. Additionally, the strength of the returning radar signals for some objects and materials can be different when the target is viewed from different angles.

SAR data may be obtained for an area with a specific target (e.g., one or more buildings) as the satellite passes over the target area by sending out radar pulses and capturing the echoes from scattered and reflected energy that makes it back to the satellite. The SAR data may be collected during a single orbital pass of the satellite. SAR satellites in low Earth orbit can have an orbital period of approximately 90 minutes, for example. Although this is a fairly short time, it does not mean it can necessarily return to view the same target every 90 minutes, as the Earth will have rotated during the orbit.

The period of time during which the satellite continuously sends out and receives back the scattered and reflected energy, may be referred to as a single acquisition. During the single acquisition (or collection of radar data), the SAR payload will continuously send out pulses and receive radar returns in between the pulses. In an example, the SAR antenna may be transmitting 10% of the time and receiving 90% of the time. During the acquisition, the satellite will move with respect to the target area that is being imaged. The movement is actually used advantageously to form a synthetic aperture, meaning that a much smaller antenna can achieve a similar azimuth resolution to a much longer satellite. If during the acquisition the SAR beam is fixed at a certain angle over this time, it will scan over the ground in a swath. This is known as strip map mode. In this mode, the amount of time of the acquisition over the area of interest is relatively short.

In the current disclosure, radiometric measurements (e.g., amplitude and phase) derived from SAR data or from processed SAR images are used to differentiate between damaged and undamaged buildings by comparing the brightness of the reflected and scattered return energy in SAR images taken from different angles. One way to obtain images from different angles is to make two or more orbital passes over the target area and to collect images from different angles during each pass. For example, this can be done using the traditional strip map mode. In this case, different sets of data are acquired from different acquisitions. An advantage of using multiple acquisitions from different orbital passes is that the satellite does not need to rotate or steer its beam during the acquisition, which may be beneficial for larger SAR satellites that are not as agile or are not designed for electronic or mechanical beam steering. However, one disadvantage of acquiring images over multiple acquisitions could be that more time is required to obtain the necessary data sets since multiple orbital passes are required. In fact, it can take days or even weeks and months for a traditional SAR satellite to come back to image the same area on Earth, meaning that it can take a long time (e.g., weeks or months) for a single satellite to acquire multiple images of the same area on Earth, for example to acquire images taken from multiple viewing angles. The issue of time can be alleviated by using more than one satellite to obtain images of the area of interest from different angles. Using more than one SAR satellite operating together in a constellation can provide for more frequent revisit times, meaning that it takes less time to collect multiple images from different viewing angles. For example, the revisit time for a particular location on Earth can be a day or less with a sufficiently large constellation of SAR satellites, or 12 hours or less, or six hours or less.

Alternatively, in another example, images taken from different angles can be obtained from SAR data acquired during only one orbital pass. This provides the significant advantage of not having to wait for subsequent orbital passes or orbital passes from other satellites in order to obtain additional imagery from different angles. To obtain additional SAR data for a target over an extended period of time, the SAR beam can be steered such that the angle of the SAR beam stays pointing at the area of interest as the satellite passes overhead. This is known as spotlight mode or simply spot mode. The steering can be done either electronically or mechanically. In an example of electronic steering, a phased-array antenna changes the angle of the beam by adjusting the timing and power of the transmitted radar energy from different parts of the antenna, and no physical rotation of the satellite is required. However, the angle through which the beam can be steered is limited, for example to plus or minus 2.5 degrees. In another example, the satellite can be mechanically steered, such that the whole satellite or a portion of the satellite (e.g., a SAR payload or a reflector) is mechanically steered so that it remains pointing at an area of interest as it passes overhead. The advantage of mechanical steering is that much larger angle ranges (e.g., plus or minus 10 degrees, plus or minus 20 degrees, or more) can typically be achieved using this extended spotlight mode by extending the time that radar beam dwells on or stays pointing at the area of interest. For example, mechanical steering of an appropriate satellite can extend the acquisition time to 10 seconds or greater.

Figure 1B shows diagrammatically an example of how multiple images of a target can be taken from different viewing angles in a single orbital pass of a satellite. In figure 1B, satellite 102 is flying in space past target building 104 in flight direction 107, known as the azimuth direction. In the example shown, mechanical steering is used to keep the satellite 102 pointing at building 104 as it flies by. As satellite 102 approaches the target area, it rotates to point the antenna of the SAR payload 108 at the target area containing building 104, as shown at position 102a. This is called squinting, because the satellite is looking forward as well as to the side. Note that the satellite 102 is not passing directly over building 104. As noted previously, SAR is typically side-looking. In figure 1B, the satellite 102 can be thought of as travelling on a flight path that is behind and above building 104, and side looking out of the page to form the geometry of figure 1A. As the satellite approaches the point where building 104 is directly perpendicular to the flight direction 107, as shown by position 102b, it is at its closest point to building 104. As the satellite passes point 102b, it continues to rotate to remain pointing at building 104, eventually ending up at position 102c, where the satellite is now squinting backwards.

During the manoeuvre shown in Figure 1B, the satellite can acquire multiple images of building 104 from multiple viewing angles, formed from a combination of the look angle and the squint angle. These images can be acquired from multiple acquisitions, for example by turning the SAR payload on and off during the manoeuvre. It can also be acquired by a single acquisition by using the spotlight mode or an extended spotlight mode (also known as dwell and extended dwell mode) whereby a single acquisition of SAR data is obtained during the time that the satellite remains pointing, or "staring" at the target building 104. Instead of acquiring SAR data over a short period (e.g., less than 1 second) as is the case in strip mode, spotlight and extended spotlight mode could be used to acquire SAR data over a much longer period of time, for example up to 10 seconds, or even up to 25 seconds or more. In an example, the amount of time for the satellite to travel from position 102a to position 102c could be 25 seconds, translating to swept angle $\Theta_2$ of

approximately 20 degrees, for example. Shorter acquisitions are possible, but with lower total acquisition times and lower swept angles. Longer acquisitions could also be possible, with correspondingly higher acquisition times and higher swept angles.

The single acquisition for a target may be used to generate a single very high-resolution image of the area of interest. Generally, the more time is spent in an acquisition, the more information is obtained. Alternatively, the single acquisition can be split up into multiple images, or "sub-apertures", with the data from each sub-aperture being used to form a separate image. Because spotlight or extended dwell mode is achieved by changing the angle of the beam (either electronically or mechanically) to keep the radar beam pointing at the area of interest as the satellite passes overhead during a single orbital pass, sub-apertures of a single acquisition can be used to generate multiple images of the same area from different viewing angles. Using extended spot or dwell mode and a single acquisition from one orbital pass has the advantage of being able to efficiently obtain many images of relatively high resolution from different viewing angles quickly in a single orbital pass.

The raw image data that is generated from dwell mode indicates, or represents, the strength of radar pulses received by the satellite from an area of interest. Each sub-aperture or sub-image may comprise a plurality of data values. In other words, SAR data that is collected for a single acquisition of a target may be comprised of a number of sets of data values. More specifically, each set of data values comprised within a sub-image may be a set of pixel values. The pixel values may be grey-scale pixel values, such that each sub-image that is obtained during dwell mode is a greyscale image of the geographical area. Each set of data values may be obtained at a different viewing angle. Thus, it may take a predefined amount of time to obtain the data required for the single acquisition (i.e., to image the geographical area from a number of different viewing angles). This predefined amount of time may be referred to as the dwell time. The obtaining of SAR data for a single acquisition may otherwise be described as multi-angular, as each image is taken from a different viewing angle. In some examples, a single acquisition of SAR data may be made up of 32 sub-apertures. This number of sub-apertures has been found by the inventors to provide a good quality of acquisition (i.e., a suitable level of resolution of each sub-image) whilst ensuring that a large range of data (i.e., a suitable number of sub-images, with each sub-image being captured at a different viewing angle) can be obtained from the acquisition. It also provides a suitable amount of data for the statistical estimators that might be used to help differentiate damaged from undamaged buildings. However, the invention is not limited to this number of images or sub-apertures. For example, 24 images or less could be used, or 12 images or less. Minimally, only two images from different angles are required, although a greater number of images from a greater range of angles will provide a more accurate statistical estimation of the differences in the radiometric measurements for a given target at different angles.

Figures 2A and 2B illustrate the effect of the damage status of a building on the reflections and/or scattering of radar pulses from that building. More specifically, figure 2A illustrates a SAR satellite observing reflections and scattering of radar pulses off of an undamaged building 202 from two different viewing angles, and figure 2B illustrates the reflection and scattering of radar pulses off of a damaged building 204.

Radar pulses that are reflected and/or scattered off of a building 202, 204 can have different properties depending on a damage status of that building. More specifically, an undamaged building can display anisotropic reflecting and scattering properties, whereas a damaged building can display more isotropic reflecting and scattering properties. Anisotropy and isotropy are terms used in radar signal processing to describe the directional dependence of the reflected and scattered radar signal. Generally, the term "anisotropy" is used to describe a property of a medium that exhibits different properties or responses in different directions. In contrast, the term "isotropy" is used to describe a property of a medium that exhibits the same properties or responses in all directions. In the context of radar signal processing for building damage classification, anisotropy and isotropy can be used to describe the difference in the perception of returning radar pulses from the target at different viewing angles. An object that scatters and reflects radar pulses in an isotropic manner means it scatters the energy in a similar manner in every direction. An object that scatters radar pulses in an anisotropic manner scatters radar pulses more strongly in certain directions.

The undamaged building 202 of figure 2A demonstrates anisotropic properties. That is, the building 202 demonstrates an anisotropic return of radar pulses that are scattered and reflected off of the building at different viewing angles. This means that the degree of scattering of radar beams off of the building 202 can be different at different viewing angles, and so this scattering can be perceived differently by the satellite when images taken from different angles are compared. In other words, building 202 demonstrates a variation in radar backscatter as a function of the observation angle. Anisotropic scattering can occur in a variety of scenarios, such as when the target has a non-uniform shape or structure, or when the medium surrounding the target has anisotropic properties. This means that the same target or surface can scatter the radar signal differently depending on its structural properties, the position of the satellite and the SAR payload, and the viewing angle of the target. For example, an intact building that has relatively large flat and angular surfaces will tend to reflect and scatter SAR energy preferentially in certain directions, and neighbouring buildings may also have anisotropic properties.

Figure 2A illustrates a satellite 210a and a satellite 210b that are observing building 202 from two different viewing angles: a first viewing angle $\theta_3$ and a second viewing angle $\theta_4$. In this example, the satellites are travelling into or out of the page and are side-looking, as explained with reference to figure 1A. At the point showed in figure 2A, the satellites are side looking directly perpendicular to their direction of travel. In otherwords, the satellites and the target are aligned within the plane of the drawing in order to simplify the explanation. In this case the viewing angle can be considered to be the same as the look angle. In an example viewing angle $\theta_3$ may be 30 degrees and viewing angle $\theta_4$ may be 10 degrees. At the first viewing angle $\theta_3$, returning radar beam 206a may be reflected straight off of the intact roof of the undamaged building 202a back to the satellite 210a. Thus, the satellite 210a may observe a very strong returning radar signal from reflection 206a (i.e., minimal or no scattering). Satellite 210a may also observe a strong corner reflection 206b, which has bounced off the wall of building 202 and the roof of neighbouring building 212 before returning to 210a. Reflection 206b will likely not be quite as bright as reflection 206a because reflection 206b undergoes a double bounce before returning to satellite 210a, but both reflections 206a and 206b will still provide relatively high radar readings back to satellite 210a at viewing angle $\theta_3$, meaning that the building will look quite bright in a SAR image obtained from data acquired at that particular viewing angle.

By contrast, at the second viewing angle $\theta_4$, the strong reflection 206c from the roof of building 202 is reflected back at an angle that misses transmitting satellite 210b, and so the intensity of the radar return that is observed by satellite 210b with a viewing angle $\theta_4$ will be significantly lower than the intensity of beam 206a returned to satellite 210a at viewing angle $\theta_3$. Furthermore, radar reflection 206d may bounce downwards off the side of the building 202a and is not directed towards the satellite 210 at all, so that that returned beam 206d is not observed by the satellite 210. Note that satellite 210b is not on the same orbital track as satellite 210a, since it too is flying in a direction that goes straight into the page. In an example, satellite 210b could be the same satellite as satellite 210a travelling on a separate orbital track during a different orbital pass. Or satellite 210b could be a different SAR satellite altogether travelling at the same time or at a different time from satellite 210a. If satellites 210a and 210b were operated in spot light or dwell mode, with figure 2A representing the middle point of the spot mode manoeuvre for each of satellite, satellites 210a and 210b could both acquire multiple images from different viewing angles (while maintaining roughly the same viewing angles $\theta_3$ and $\theta_4$) as they fly past building 202a from out of the page and into the page.

In Figure 2A, only reflections are shown at the two angles in order to demonstrate how reflections can interact with man-made objects with angular sides such as buildings. At both viewing angles $\theta_3$ and $\theta_4$ the satellites 210a and 210b respectively may still receive some backscattered radar energy from the target, as the building surfaces can also cause some backscatter of radar energy in all directions, but these returns are typically much weaker than the strong reflections caused by the flat roof. The difference in the level of returned radar energy that is recorded between images obtained by SAR data from angles $\theta_3$ and $\theta_4$ is an example showing how undamaged building 202a can display anisotropic properties in the radar return when viewed from different viewing angles.

In contrast, figure 2b shows that when an incoming radar pulse from satellite 210c interacts with a damaged building 202b, the radar returns can be similar regardless of the viewing angle, thereby exhibiting isotropic properties. Isotropic scattering and reflection can occur in scenarios where the target has a non-angular shape or structure, or when the medium surrounding the target has isotropic properties. For example, a damaged building may have many small and randomly oriented surfaces that will scatter and reflect SAR energy equally in all different directions given the random nature of their arrangement. If neighbouring buildings are also damaged, the surrounding area can also have isotropic properties.

Damaged building 202b in figure 2B has undergone a high degree of structural damage, which means that the damage sustained to damaged building 202b has adversely affected the structural integrity of the building. In an example, damaged building 202b in figure 2B has been reduced to a pile of rubble. Radar pulses are reflected and backscattered off of the pile of rubble, which is all that is left of damaged building 202b, quite differently from undamaged building 202a. For example, a pile of rubble will contain much smaller reflective surfaces than undamaged building 202a that is intact. Any reflective surfaces remaining will also be much smaller and oriented in random directions compared to the well-ordered structural shape of an intact building, and as such there will be less difference, or less change, in reflected energy when the pile of rubble is viewed from different angles. Dust and debris can also reduce the total amount of reflected energy, meaning that most of the energy received back at the satellite is backscattered energy, which appears similar from all directions. In another example, if a building has been completely burnt out, the resulting debris will also tend to scatter radar energy in an isotropic manner. In other words, no matter what viewing angle damaged building 202b is being viewed from, the energy reading of the returning scattered and reflected radar signals can exhibit a fairly consistent reading. The similarity in perception of radar scattering at different viewing angles indicates that the radar returns from damaged building 202b are displaying isotropic properties.

The isotropic or anisotropic property of a target (e.g., a building) can be used as a key feature to identify and characterise the status of a building. More specifically, this property can be used to characterise a building as either structurally damaged or structurally undamaged. In an example, SAR data from single satellite performing a single orbital pass with a single acquisition comprising a plurality of sets of data (e.g., sub-apertures) can be used to determine whether a building displays isotropic or anisotropic properties. The single acquisition may be acquired during a time period of greater than 10 seconds. Data obtained from an acquisition that lasts 10 seconds or longer is beneficial as this length of acquisition time allows for high-resolution data to be captured. Furthermore, the satellite may be mechanically steered during the single acquisition to remain pointing at the area of interest. As mentioned above, an advantage of mechanical steering is that much larger angle ranges can typically be achieved, meaning also that longer acquisition times (e.g., greater than 10s) can also be achieved.

Based on this assessment, the building can then be classified either as structurally damaged or structurally undamaged. Advantageously, the classification can be performed using post-event SAR imagery, meaning that only imagery taken after the event occurs is required to classify an identified building as structurally damaged or structurally undamaged. This is different from some other attempts at damage detection from space that require having both pre- and post-event imagery, which poses a problem if no pre-event imagery of the area of interest exists. From this point onwards the term "damaged" will be understood to refer to a structurally damaged entity and, similarly, the term "undamaged" will be understood to refer to a structurally undamaged entity.

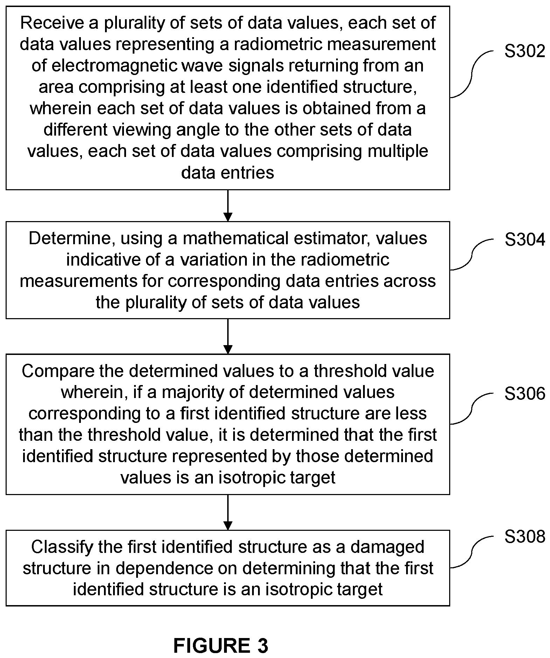

Figure 3 illustrates a method of classifying a structure (e.g.,a building) as a damaged structure using SAR data. Whilst the structure that is classified by the method of figure 3 (and described with respect to the figures and examples of the present application) is a building, it would be understood that this method can be performed for any man-made structure or any type of structure that exhibits the properties of an isotropic target in a damaged state and that exhibits the properties of an anisotropic in an undamaged state. The SAR data for the method of figure 3 is specifically obtained from one or more space-borne satellites. The SAR data used for the method of figure 3 may be generated using X-band frequency radar imaging. X-band frequency radar imaging generates radar pulses with frequencies that range between 8-12 GHz. The wavelength of X-band frequency radar pulses, or beams, is between 3.8-2.4 cm. The use of X-band radar data in the method of figure 3 is advantageous as this type of radar imaging produces high resolution SAR data when compared to other types of radar imaging. X-band radar is recognised, in particular, as being advantageous for use in imaging urban environments. In alternative examples, the SAR data used for the method of figure 3 may be generated using another type of radar, such as C-band radar, S-band radar, L-band radar, or P-band radar. For some types of SAR radar data, an atmospheric correction may be applied as a pre-processing step before building damage classification is performed. Atmospheric correction is the process of removing scattering and absorption effects of the atmosphere on the values of reflected and scattered energy recorded by the satellite.

The SAR data that is analysed in the method of figure 3 may be obtained using co-polarised radar transmission and reception. That is, the SAR data that is analysed in the method of figure 3 may be obtained using a radar technique that transmits radar pulses along the same axis as that in which they are received. In a more specific example, the SAR data that is analysed comprises electromagnetic wave signals obtained using vertical transmit vertical receive (W) polarisation radar. That is, the SAR sensor used to obtain radar data may transmit radar signals with vertical polarization and may receive radar signals with vertical polarization. Polarization refers to the orientation of the plane in which an electromagnetic wave oscillates. SAR sensors typically transmit linearly polarized electromagnetic waves. An advantage of using data obtained from vertical-transmit-vertical-receive radar is that rough surface scattering, such as that caused by bare soil or water, is most sensitive to this type of polarization. This means that VV data is useful for accurately detecting the isotropic scattering displayed by damaged buildings (i.e., buildings that may be reduced to rubble).

The methods described herein may be used to classify buildings that have been identified as being subjected to a natural or man-made disaster. More specifically, the buildings to be classified may, as part of the method of figure 3, be identified as being located in an area in which there has been a natural or man-made disaster. An example of a natural disaster is a wildfire. Another example of a natural disaster is an earthquake. Alternative examples of natural disasters are a tornados, landslides or any other similar natural disaster. An example of a man-made disaster is a war. The methods described herein may therefore comprise identifying that a disaster has occurred, determining an area of interest in a geographical area affected by the disaster and identifying buildings within that area of interest as buildings that should be classified. As described above, the building to be classified may be identified using any suitable means. That is, any spatial, spectral, temporal, radiometric or geometric imaging technique may be used to identify buildings to be classified. For example, the location of buildings could be identified from previously obtained optical imagery. Alternatively, and especially if no such previously obtained imagery exists, building footprints and other building information obtained from databases can also be used to identify and locate buildings. A significant advantage of the current method is that only post-event imagery is required to classify whether a building is damaged or not. Some prior-art methods of using satellite imagery to detect change as a result of natural disasters rely on having appropriate imagery of an area of interest both before and after a disaster has occurred, and then by performing change detection techniques such as inSAR. Appropriate pre-event imagery can be difficult to obtain given how large the Earth is and given the unpredictable nature of where and when disasters occur.

The method of figure 3 is initiated at step S302, in which a plurality of sets of data values are received for an area comprising at least one identified building. Each set of data values that is received represents a radiometric measurement of electromagnetic wave signals (or pulses) that have been reflected or scattered from an area of interest that comprises at least one identified building. Each set of data values that is received comprises SAR data. Each set of data values comprises a plurality of data entries, wherein each data entry is a designated slot (e.g., in an array or list of data values) within which a data value associated with that entry is stored. For example, there may be multiple SAR images (sets of data values), each taken from a different angle, each image comprising pixels (data entries), in which is stored a complex number (data value) from which the amplitude of the radiometric signal and its phase can be derived. In some examples, the sets of data values may be received as a set of arrays of data values, with each set of data values being represented by a corresponding array of data values. Each set of data values (e.g., images) may comprise the same number of data entries (e.g., pixels) as the other sets of data values (e.g., images. That is, each set of data values may comprise the same number of radiometric readings as the other sets of data values. In these examples, the data entries in each set of data values may be directly comparable. That is, the value of a first data entry in a first set of data values may be comparable to the value of a first data entry in the second (and subsequent) sets of data values. The value of a second data entry in a first set of data values may be comparable to the value of a second data entry in the second (and subsequent) sets of data values. In other examples, the sets of data values may not comprise the same number of data values as each other. In these examples, it may still be possible to compare data values in the data entries that are shared across the sets of data values, in that they correspond to the same thing. For example, the overlapping areas of multiple SAR images can be compared where they overlap. Each data entry may correspond to a portion of a geographical area that is being monitored by SAR. For example, a data value in a first data entry, in each set of data values, may correspond to a radiometric measurement obtained for a first portion of an area of interest in a monitored geographical area.

In some examples, each set of data values that is received may comprise raw radiometric measurements. That is, in some examples the data values that are received may comprise unprocessed, or uncalibrated, radiometric measurements that need to be processed before they can be used for building classification. In other examples, the data values that are received may already be processed and/or calibrated. In some examples the sets of data values that are received may be image data, whereas in other examples the sets of data values may be numerical data values. In an example where the sets of data values are image data, each set of values may be an image and each data value of a set may be a pixel value within that image. Thus, each data entry in this example may be a pixel number in the image. For example, a first data entry may correspond to the value of pixel number 1 in the image. A second data entry may correspond to the value of pixel number 2. The pixel value may be a grey-scale pixel value. In an example where the sets of data values are numerical data values, each data value may be a single numerical value indicating the amplitude of a received radar pulse. In an alternative example, each data value may be a complex number that also indicates the phase of a returning radar pulse.

In an example, the plurality of sets of data values that are received for the identified building can be obtained in a single acquisition. That is, each set of data values is obtained within the same predefined period of time during which the satellite continuously sends out and receives back the scattered and reflected energy to image an area containing a specific target, in a single orbital pass of a satellite. The single acquisition may be obtained, for example, using an extended spotlight imaging mode (e.g., extended dwell mode) achieved by mechanically steering a satellite to maintain pointing at a spot on the Earth's surface. Each set of data values may be from a sub-aperture of a single SAR acquisition that is obtained from a different viewing angle to the other sets of data values. In other words, each set of data is representative of radiometric measurements that are obtained from a different viewpoint of the target, or aspect angle.

The radiometric measurements (or electromagnetic signals) that are received at step S302 indicate the degree of reflection and/or scattering of the electromagnetic waves as a result of those waves hitting the building. That is, the radiometric measurements measure how much of the original transmitted radar pulses comes back when viewed from a particular viewing angle. Each set of radiometric measurements measures the degree of backscattering and reflection of a plurality of radar pulses that are sent down to Earth during a certain time and at a certain viewing angle. The degree of backscattering of radar pulses off of an object is sometimes referred to as the radar cross section (RCS) of that object. An object that reflects or scatters back a relatively large amount of the impinging radar energy is described as having a high RCS, whereas an object that reflects or scatters back relatively low amounts of radar energy is described as having a low RCS. The raw SAR data that is received by the satellite is typically sent to a ground station and processed, or "focussed", into an image with the radiometric data (e.g., amplitude and phase) assigned to each pixel. In an example, Single Look Complex (SLC) data is used, although other types of data such as Ground Range Detected (GRD), Analysis Ready Data (ARD), and coherence data could also be used.

The number of sets of data values that is obtained for the method of figure 3 may be any number of sets of data values that is greater than one. In some examples, the number of sets of data values may be two, or three, sets of data values. However, it is acknowledged that a higher number of sets of data values allows for a more reliable indication of the variation of backscattering by a target at different viewing angles to be obtained. For example, more than 12 data sets may provide improved accuracy, while more than 24 sets could provide even better accuracy, and more than 32 sets can provide an improved number of data points for performing statistical analysis. In a more specific example, the number of sets of data values may comprise 32 sets of data values.

In some examples, the data values received at step S302 are of a suitable format for use in the classification steps S304 to S308. In other examples, the sets of data values that are received at step S302 may be pre-processed before they are used in subsequent classification steps. That is, in some examples, one or more pre-processing operations is performed between steps S302 and S304 of figure 3. The pre-processing of data values so that they are in a suitable format for subsequent classification steps may comprise, for example, one or more of calibration, filtering, and conversion steps.

A first example of a pre-processing operation may be performed where the data values received at step S302 are pixel values. Pixel values may not directly correspond to a scientific measurement of the reflectivity of the geometry that is captured within that pixel. In order to obtain a measure of reflectivity from a pixel value of an SAR pixel, a calibration factor may be applied to the pixel value. The process of applying a calibration factor to a pixel value may be referred to as radiometric calibration. Thus, prior to step S304 (described in more detail below) radiometric calibration may be performed on the received plurality of sets of data in order to obtain the radiometric measurements of electromagnetic wave signals from the plurality of sets of data. The radiometric calibration may be used to determine a beta naught ($\beta_0$) value of radar backscatter that corresponds to each pixel value. Thus, in some examples the radiometric measurements to be used in the method of figure 3 may be beta naught values, or measurements. Beta naught backscatter is a brightness coefficient that demonstrates the reflectivity per unit area in a defined slant range. That is, beta naught backscatter is a measure of the radar brightness in a plane that is parallel to the angle of incidence of the SAR sensor. SAR images may be either single look complex (SLC) or ground range detected (GRD) images. An SLC image is generated using the natural pixel spacing of the image, whereas a GRD image is processed from the original SLC image by projecting the image into the ground range using an ellipsoid model of the Earth. An example of a calibration equation that may be used to obtain a $\beta_0$ value from an SLC pixel value is as follows:

$$\beta_0 = CF|DN_{SLC}|^2$$

In the above equation *CF* is the calibration factor and $DN_{SLC}$ is a SLC pixel value (or a digital number for a pixel). An example of a calibration equation that may be used to obtain a $\beta_0$ value from a GRD pixel value is as follows:

$$\beta_0 = CF\frac{|DN_{GRD}|^2}{sin(\theta)}$$

Where *CF* is the calibration factor, $DN_{GRD}$ is the GRD pixel value and $\theta$ is the angle of incidence of the SAR sensor. For both of the equations above the calibration factor may be a predetermined value that is determined to appropriately calibrate pixel values so as to obtain $\beta_0$ values.

It will be appreciated that, in alternative examples, step S302 may comprise receiving a plurality of beta naught values. In these examples there may be no need for a pre-processing operation to be performed on the received data values, as these values are able to be used in their received form for the proceeding steps of figure 3. In yet further examples, the radiometric measurements that are obtained at step S302, or that result from pre-processing of that obtained data, may be alternative radiometric measurements such as $\sigma_0$ (sigma naught) values or $\gamma_0$ (gamma naught) values. Sigma naught values represent the mean RCS value of a given pixel. Gamma naught values are reflectivity values that account for the reflective properties of the terrain that is imaged in a given pixel value. A gamma naught value can be obtained for a given pixel value using the beta naught value for that pixel in combination with a local digital elevation model.

A second example of a pre-processing operation is the filtering of the radiometric measurements of electromagnetic wave signals for each of the plurality of sets of data. Filtering is performed to remove unwanted noise from the received signals. Unwanted noise is particularly prevalent in radar signals due to radiation from electrical sources near the radar sensor. Radar signals are also prone to speckle noise which arises due to the interference of the returning electromagnetic waves scattered from multiple surfaces. Reducing the signal-to-noise ratio of received radar signals is desirable as it improves the accuracy of the data in those signals and therefore the accuracy of the analysis of that data. The pre-processing filtering method may use a smoothing function. The smoothing function that is used may be a speckle filtering function. Speckle filtering is a filtering method that is performed on data sets to smooth out the noise from a data set whilst retaining the edges and sharp features in the data set. Speckle filtering uses mathematical models to filter radar images to remove bright and dark spots from those images that are generated as a result of electromagnetic interference. A specific type of speckle filtering that may be used with the methods disclosed herein is lee speckle filtering. A lee speckle filter reduces speckle noise from a radar image by applying a spatial filter to each pixel in an image. The spatial filter filters image data based on local statistics calculated within a square window. The value of the central pixel of the window is replaced by a value that is calculated using the neighbouring pixels of that central pixel.

A third example of a pre-processing operation is the conversion of received data values onto the decibel (dB) scale. The sets of data values that are received at step S302 may be reflectivity measurements. Reflectivity is a measurement of the returned power back to a radar sensor. The units of reflectivity may be difficult to process mathematically. In one example, the units of reflectivity may be $mm^6/m^3$. These units may be difficult to work with as their raw values vary greatly depending on the target that is to be monitored. That is, the range of raw values of reflectivity may be large between different targets. The sets of data values received at step S302 may comprise alternative types of measurements with units that are equally difficult to implement into the methods disclosed herein. Thus, it may be advantageous to convert the received data values so that the range of power values within the plurality of sets of data values is smaller. The conversion may convert the received data values into the decibel (dB) scale. Conversion of data values into the decibel scale is calculated by multiplying a power value by 10*log10. In an example where the data values are used to generate radar images, converting power values into the decibel scale brightens pixel values for targets that display high levels of backscattering, which allows for better differentiation between isotropic and anisotropic targets.

In some examples of the method described herein, the term "data value" refers to a measurement (either visual or numerical) that has not been subjected to the pre-processing methods described above. That is, in some examples, method steps S304, S306 and S308 are performed on data values received from an SAR radar imagery. In other examples, the data values may be subjected to one or more of the pre-processing operations described above in order to obtain radiometric measurements on which the classification method described below is to be performed.

Thus, step S304 may either be performed on radiometric measurements (i.e., radar signals) taken from data values obtained directly from SAR imagery, or on radiometric measurements that are obtained by further processing those data values. At step S304 a value indicative of a variation in the radiometric measurements for each data entry across the plurality of sets of data values is determined. That is, at step S304 a calculation is performed to determine the degree of variation, or difference, between the radiometric measurements for corresponding data entries (i.e., the data value corresponding to a common data entry) across the plurality of sets of data values. This step may be performed independently for each data entry within a set of data values. In the example where each data entry in a set of data value is a pixel number, and each value is the amplitude of the radiometric measurement for that pixel number, step S304 may determine the variation in the brightness (or power) value of that pixel number across the sets of data (e.g., the variation of the brightness in pixel number 1 across the plurality of sets of images). As each set of data is obtained at a different aspect angle, or viewing angle, step S304 effectively calculates the variation in brightness (or power) of a data entry, or pixel number, across the range of viewing angles obtained for a single acquisition. In other words, at step S304 the difference in scattering of electromagnetic waves from the building of interest across the different viewing angles of the acquisition is determined for that particular pixel. The building may cover one or more pixels. The higher the resolution of the of SAR imagery, the more pixels can be used for determining the variation across viewing angles for that building. This can result in a more accurate determination of the true variation and a more accurate classification of the building as damaged or undamaged. The determining of the difference in measurements for corresponding pixels across the sets of data can be determined using a mathematical estimator. The estimator may be computed in dependence on the data that is received at step S302. The mathematical estimator may comprise calculating a coefficient of variation. The mathematical estimator may be any suitable estimator that calculates a variation in the data values of each data entry across the sets of data values, such as standard deviation, a correlation coefficient, or K-mean clustering.

After the values of step S304 have been determined, then at step S306 the determined values are compared to a threshold value. The threshold value is a value below which the variation across data sets (images) for a particular pixel is determined to be isotropic. If, for example, the majority of pixels corresponding to a building are determined to be isotropic, then it can be determined that a first identified building associated with those corresponding values (pixels) is an isotropic target. That is, if the majority of the determined values are less than the threshold value, it is determined that a building associated with those values is an isotropic target. A majority may be defined as any number of values that is greater than 50% of the total number of values representing a building. In some specific examples, a majority may be defined as any number of values that is greater than or equal to 50% of the total number of values representing the building. In the case where the a building is represented by only a single pixel, the value of that pixel forms a majority of one (versus zero) and the building can be classified as damaged or undamaged based on the variation in that pixel alone. The threshold value may be calculated according to the received SAR data. In an example, the threshold value may be calculated using a cumulative distribution function for the data (as described in more detail below). The calculation of the threshold value is described in further detail below.

It has been mentioned above that a building displays isotropic qualities if its radar signal scattering profile has a low level of variation across a range of viewing angles, or aspects. In other words, the building can be determined to be isotropic if the power values that are received by an SAR sensor from the building are substantially consistent across a range of viewing angles. Thus, if the value indicative of the variation of radiometric measurements for each corresponding data entry (pixel) across the plurality of sets of data values (images) corresponding to a building are low (i.e., below the threshold value of step S306), then it can be determined that the building associated with those data entries (i.e., the building associated with the "determined value" for that entry) is an isotropic target. Thus, step S306 comprises determining that the building is an isotropic target if the determined value associated with that building is less than the threshold value. A building may be identified by more than one data entry. Thus, in some examples, the multiple data values obtained from data entries representing the building may be observed. In these examples, if a majority of corresponding data entry (pixel) across the plurality of sets of data values (images) corresponding to a building is low (i.e., below the threshold value of step S306), then it can be determined that the building associated with those data entries is an isotropic target. Thus, step S306 comprises determining that the building is an isotropic target if the majority of determined values associated with that building are less than the threshold value.

At step S308 the building is classified as a damaged building in dependence on determining that the building is an isotropic target. A link between the isotropic quality of the building and its classification as damaged may be stored in anticipation of this method step. That is, the method of figure 3 may comprise storing a link (e.g., in the memory of a computer) between the isotropic property of the building and its classification as a damaged building. Thus, at step S308, if it is determined that the building is an isotropic target then the building is classified as a damaged building.

The method may be further configured to output an indication that the building is a damaged building in response to classifying the building as a damaged building at step S308. In some examples, the method may output a binary indication that the building is damaged. For example, the method may output a value of d =1 for the building if the building is identified as a damaged building. A benefit of the method providing this output is that the output can then be viewed by disaster response units and a suitable response can be organised in dependence on the output.

It is mentioned above that, at step S306, it is determined that the building is an isotropic target if the determined value (or, in some examples, the majority of determined values) associated with that building is less than the threshold. The method may further comprise, if the determined value (or majority of determined values) associated with the building is greater than the threshold, determining that the building is an anisotropic target. It has been mentioned above that a building displays anisotropic qualities if its radar signal scattering profile has a high level of variation across a range of viewing angles, or aspects. In other words, a building can be determined to be anisotropic if the power values that are received by an SAR sensor from that building are substantially different across a range of viewing angles. Thus, if the value (or majority of values) indicative of the variation of radiometric measurements for each data entry across the plurality of sets of data values is high (i.e., above the threshold value of step S306), then it can be determined that the building is an anisotropic target. Thus, step S306 may further comprise determining that the building is an anisotropic target if the majority of determined values associated with that building are greater than the threshold value.

In an alternative example, there could be separate lower and upper thresholds. In this case, if the determined value is less than the lower threshold then the building is considered to be an isotropic target and can be classified as damaged. If the determined value is greater than the upper threshold then the building is considered to be an anisotropic target and is classified as undamaged. If the determined value falls in between the upper and lower threshold, the building could be classified as indeterminate because it is not clearly isotropic and anisotropic, which could mean that it is partially damaged, or that it cannot be classified as damaged or undamaged with sufficient confidence.

Step S308 may further comprise classifying the building as an undamaged building in dependence on determining that the building is an anisotropic target. A link between the anisotropic quality of the building and its classification as undamaged may be stored in anticipation of this method step. That is, the method of figure 3 may comprise storing a link (e.g., in the memory of a computer) between the anisotropic property of the building and its classification as an undamaged building. Thus, at step S308, if it is determined that the building is an anisotropic target then the building is classified as an undamaged building.

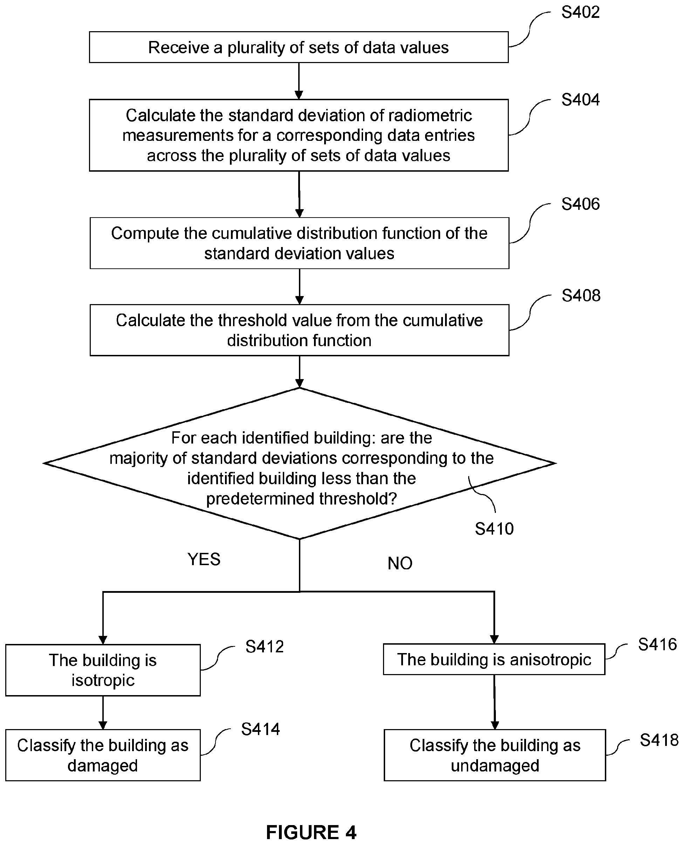

The method may be further configured to output an indication that the building is an undamaged building in response to classifying the building as an undamaged building at step S308. In some examples, the method may output a binary indication that the building is undamaged. For example, the method may output a value of $d$ =0 for the building if the building is identified as an undamaged building. A benefit of the method providing this output is that the output can then be viewed by disaster response units and so it can be determined that a response may not be required for the building. Figure 4 illustrates a detailed exemplary method of classifying a building as a damaged building illustrated in figure 3. The method may be performed on an identified building, or on a geographical area containing the identified building. Step S402 of figure 4 is the same as step S302 of figure 3. That is, as with the method of figure 3, the first step of the method of figure 4 comprises receiving a plurality of sets of data values. In some examples, the data values received at step S402 are of a suitable format for use in the classification method steps S404 to S418. In other examples, the sets of data values that are received at step S402 may be pre-processed using one or more of the pre-processing operations described above before they are used in subsequent classification steps.

Steps S404 and S406 of figure 4 provide exemplary sub-steps of step S304 in figure 3. That is, steps S404 and S406 describe an exemplary method for determining, using a mathematical estimator, a value indicative of a variation in the radiometric measurements for each data entry across the plurality of sets of data values. In step S404, the exemplary method for calculating the determined value comprises calculating the standard deviation of radiometric measurements obtained for each data entry across the plurality of sets of data values. That is, the mathematical estimator may use a standard deviation calculation. The standard deviation is a well-known measure of the amount of variation, or spread, across a set of values. A standard deviation calculation therefore provides a straightforward method for determining the degree of variation across radar signal measurements. The standard deviation calculation may be performed for the data values of each entry (e.g., the amplitude of the radar return of each pixel) in a set of data values. In one example, the standard deviation calculation may be performed on beta naught values of the sets of data values. The standard deviation may be calculated according to the following equation (for a pixel ($i,j$)):

$$\sigma(i,j) = \sqrt{\frac{1}{N} \sum_{n=1}^{N} [\beta_0(i,j,n) - \mu(i,j)]^2}$$

Where $N$ is the number of sets of data (e.g., sub-apertures), $\beta_0(i,j,n)$ are data values for a data entry, $\sigma$ is the standard deviation and $\mu(i,j) = \frac{1}{N}\sum_{n=1}^{N}\beta_0(i,j,n)$ is a data value for a set of data, $\sigma$ is the standard deviation and $\mu(i,j) = \frac{1}{N}\sum_{n=1}^{N}\beta_0(i,j,n)$. Note that the standard deviation calculation may be performed on alternative data values or radiometric measurements that are not beta naught values. The standard deviation calculation may be performed for data values that are not pixel values.

In figure 4, determining the value using a mathematical estimator may further comprise step S406 of computing a cumulative distribution function (CDF) for the calculated standard deviation values across the plurality of data values. The CDF is the probability that a random variable is valued at less than or equal to x. The cumulative distribution function for a given standard deviation value may be calculated according to the following equation:

$$F_{\sigma}(t) = P(\sigma \leq t)$$

Where $\sigma$ is the standard deviation value.

At step S408 of figure 4 a threshold value is calculated from the cumulative distribution function. That is, the cumulative distribution function may be used to calculate the threshold value $T$. In one example, the threshold value may be defined as $T = min(t_{90}, 3)$. $t_{90}$, in turn, may be calculated from the cumulative distribution function. The calculation used to determine $t_{90}$ may be $P(X \leq t_{90}) = 0.90$, where X is a random variable. That is, the value $t_{90}$ may correspond to the value for which the cumulative distribution probability value is 0.9, or 90%. The threshold value may alternatively correspond to a value for which the cumulative distribution probability value is of any other suitable value. Examples of other suitable probability values are 0.8 (80%) and 0.7 (70%).

At decision block S410 it is determined for each identified building whether the majority of standard deviations corresponding to the identified building is less than the predetermined threshold. This step corresponds to step S306 of figure 3. That is, at step S410 it is determined whether $\sigma < T$ for the majority of pixels corresponding to the identified building. In a more specific example, step S410 may determine whether the standard deviation for the majority of data values is less than or equal to the predetermined threshold. That is, it may be determined whether $\sigma \leq T$.

If the answer to decision block S410 is yes, then it may be determined at step S412 that the building is an isotropic target. That is, if it determined that $\sigma < T$ for the majority of standard deviations representing the identified building, then it is determined that the building is displaying an isotropic scattering pattern. In a more specific example, if it is determined that $\sigma \leq T$ for the majority of standard deviations representing the identified building, then it may be determined that the identified building is isotropic. In response to determining that the building displays isotropic qualities, the building may be classified as a damaged building at S414. The classification of the building as a damaged building may be made by consulting a stored link between isotropic behaviour and a damaged building. Once it has been determined that the building is a damaged building, this result may be output by the method. More specifically, a value of $d = 1$ may be output by the method. This value may be used by disaster response units to coordinate response efforts to the damaged building.

If the answer to decision block S410 is no, then it is determined at step S416 that the building is an anisotropic target. That is, if it determined that $\sigma > T$ for the majority of standard deviations representing the identified building, then it is determined that the building is displaying an anisotropic (or irregular) scattering pattern. In response to determining that the building displays anisotropic qualities, the building may be classified as an undamaged building at S414. The classification of the building as an undamaged building may be made by consulting a stored link between isotropic behaviour and an undamaged building. Once it has been determined that the building is an undamaged building, this result may be output by the method. More specifically, a value of $d = 0$ may be output by the method. This value may be used by disaster response units to establish that the undamaged building does not require disaster relief assistance.

In an alternative version of the method illustrated in figure 4, it may be determined whether the majority of standard deviations corresponding to an identified building are greater than the predetermined threshold. That is, it may be determined whether $\sigma > T$ for the majority of standard deviations representing the identified building, and if the answer is yes the building may be determined to be anisotropic. Similarly, if the answer is no, the building is determined to be isotropic. In other words, in some examples, the decision is based on whether the standard deviation is greater than the predetermined threshold, and the steps S412 and S414 may be reversed with steps S416 and S418.

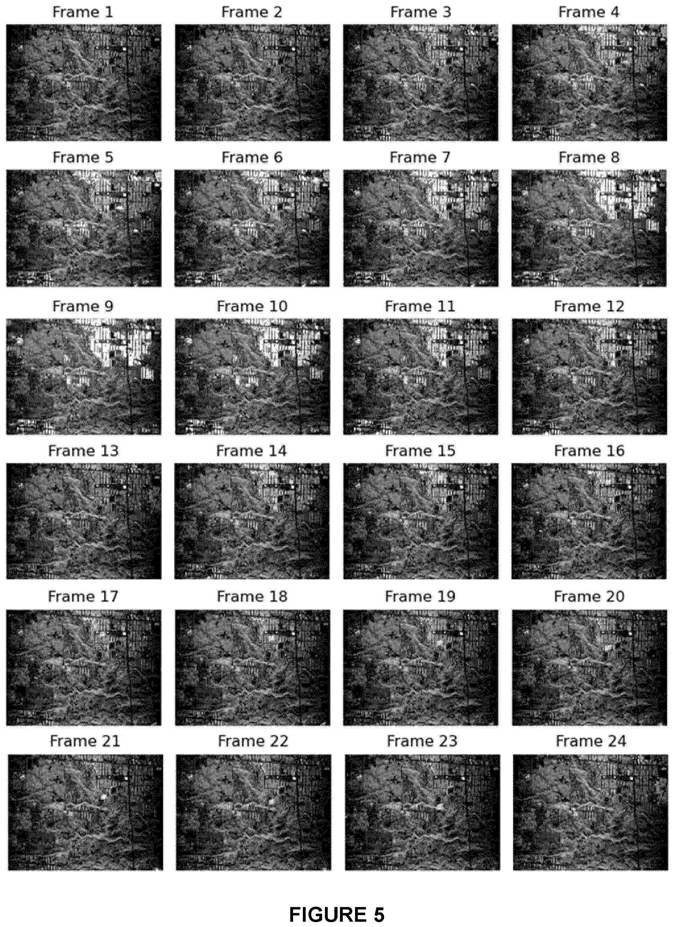

Figure 5 provides a visual representation of the first step of the methods illustrated in figures 3 and 4. That is, figure 5 illustrates an example of a plurality of sets of data values (specifically 24 sets of data values), each set of data values representing a set of radiometric measurements of electromagnetic wave signals returning (i.e., scattered or reflected) from at least one identified building. The set of data values may represent radiometric measurements obtained from only the identified building, or from a plurality of buildings that comprises the identified building. As illustrated in figure 5, the set of data values may also represent radiometric measurements obtained from a geographical area surrounding (and containing) the building. That is, in some examples, each set of the plurality of sets of data values comprises a plurality of radiometric measurements of electromagnetic wave signals returning from a geographical area that includes the identified building or buildings. This means that the amount of radiometric data that is received by the methods described herein is wider that merely the data that relates to the identified building.

In the example illustrated in figure 5, each set of data values is an image frame. Each frame may illustrate the beta naught values derived from a sub-aperture, or from a different viewing angle, of the SAR acquisition. Each beta naught value may be illustrated by a pixel of frames 1 to 24. The method may be called a pixel-based detection method, because it analyses pixel values. The beta naught values may be illustrated in the decibel scale. The frames of figure 5 provide a pictorial representation of the strength of the detected radar returns for different geographical areas shown in the image. The frames are illustrated so that, in each frame, a strong radar return from reflection and scattering is illustrated as an area of brightness, and a low radar return is illustrated as an area of darkness. This difference in brightness is demonstrated by frame 10, in which a number of buildings are identified in an area of brightness in the top right-hand corner of the frame, against the surrounding environmental area which is illustrated by darker shading. The advantage of using x-band frequency radar imagery is also illustrated in figure 5, as the high resolution of the image allows for individual buildings to be identified from space.

In the example of figure 5, the plurality of sets of data values are obtained by a single satellite during a single orbital pass using a single acquisition in extended spotlight imaging mode shortly after a damaging event. The area imaged is of a suburban area near Vaughan, Ontario, Canada, which is located just north of Toronto. The SAR imagery was acquired on April 16th, 2023, shortly after the area had been subjected to a fire that started on April 12th, causing extensive damage to over 20 buildings. During the single acquisition, approximately 25 seconds worth of SAR data was obtained, that was subsequently divided into 32 sub-apertures, with each containing approximately 0.78 seconds worth of data. Of the 32 sub-apertures, 24 image frames are shown in figure 5. Each image frame is obtained at a different viewing angle to the other frames in the set. That is, the angle from which the SAR sensor is viewing at the geographical area is different for each of frames 1 to 24. As described previously, this is achieved by using an extended dwell spotlight mode whereby the satellite rotates to stay pointing at a scene as it flies past on its orbital path.

As can be seen from the sequence of images the overall brightness of certain parts of the scene changes between the different frames, while in some parts of the scene the overall brightness does not change much. As the frame number increases sequentially, the viewing angle of the scene changes from one frame to the next. In this example, the single acquisition is divided equally to form the sub-apertures so each frame represents the radar energy collected over a similar period of time and hence has a similar resolution. The viewing angle may change by roughly the same amount between each frame. In this example, the total variation in viewing angle over the single acquisition is about 20 degrees, meaning that the variation in viewing angle between each of the 32 frames may be about 0.63 degrees, so that frame 1 is obtained at a viewing angle of 0 degrees, frame 2 is obtained from a viewing angle of 0.63 degrees and so on. The entire acquisition was acquired as the satellite passed by the location on its orbital track, and as such each image is taken from the same altitude, although the distance to the scene can change as the satellite flies past. In Figure 5, substantially the same geometry is visible in each of the figures (i.e., the longitudinal and latitudinal limits of each of the frames are approximately the same). This is because in spotlight mode the target area is maintained within the radar aperture. Note that even if there is some differences in imaged area for each frame, this can be corrected for and cropped as necessary as long as the particular target area is within the image.

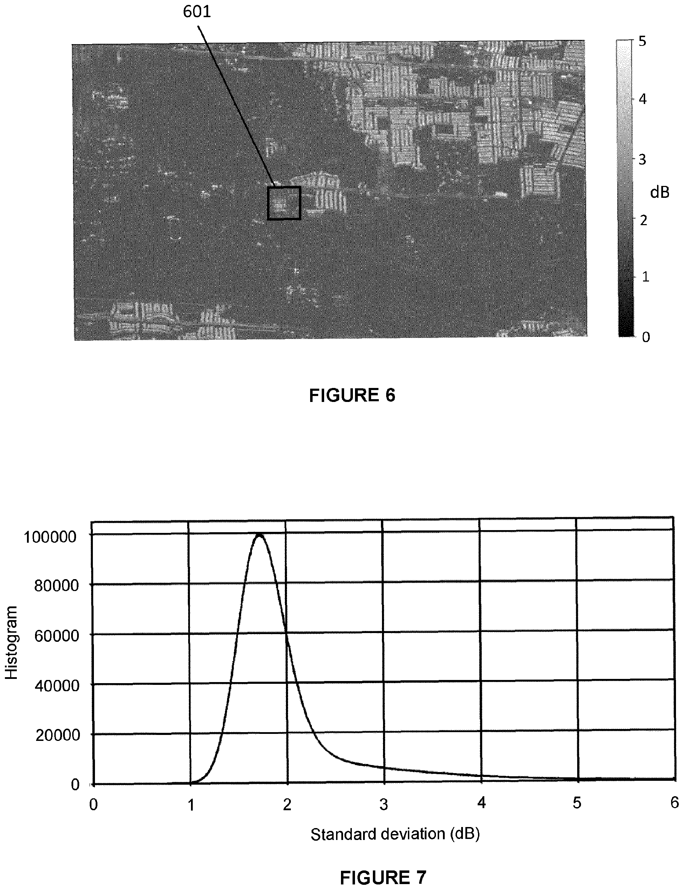

It can be seen from figure 5 that, as the viewing angle of the scene changes, the strength of the scattered and reflected radar energy that is observed coming from buildings inside the geographical area can vary significantly. For example, in frame 1 the buildings within the geographical area in the top left corner of the frame are shaded darkly, illustrating a low degree of signal being scattered and reflected back to the SAR sensor. As the frame number increases from 1 to 9 (i.e., as the viewing angle changes) the depiction of the buildings increases in brightness. This increase in brightness represents an increase in the degree of scattered and reflected radar signals being captured by the SAR sensor. Likely, from these viewing angles, more of the transmitted SAR signals are being reflected back to the SAR sensor from the walls and roof of the buildings, forming the bright return. From frame 10 to 24 the brightness of the buildings decreases again. This decrease illustrates a reduction in received radar energy as the viewing angle of the scene continues to change. Thus, the backscattering and reflecting behaviour of buildings in the geographical area of figure 5 can be observed over the course of the 24 frames covering a range of viewing angles. The degree of brightness by which a building may be shaded in frames 1 to 24 may be directly proportional to the value of radiometric measurements obtained from that building by the SAR sensor. This relationship is described in more detail with respect to figure 6. The example in figures 5 through 10 are illustrated with data taken from 32 sub-apertures of a single acquisition obtained during a single orbital pass. In other examples the number of frames in the set may be more or less than 32. For example, similar results could likely have been achieved with the single acquisition divided into 24 apertures taken from different viewing angles. In this case, each sub-aperture would have higher resolution, but there would be fewer of them so the confidence in the statistical estimator may be less. Using 32 sub-apertures with a 25 second acquisition provides excellent resolution for being able to identify individual buildings in each image (e.g., each building has at least multiple pixels associated with it) while providing sufficient data to have confidence in the statistical estimators.

Figure 6 provides a pictorial representation of the standard deviation of data values obtained from the 32 sub-apertures of which 24 frames are shown in figure 5. That is, figure 6 illustrates a measure of variation (or difference) in signal scattering detected across the 32 frames for each data entry or pixel in the frame. The standard deviation is, specifically, the square root of the variance of the signal values across a common data entry (pixel number) in each of the data sets. The standard deviation may be calculated for each pixel of the image across the 32 frames. It can be seen, for example, that in general the buildings in the top right corner of figure 6 are brighter than other areas shown in figure 6 without buildings. The higher value indicates a higher standard deviation, which is indicative of a greater variance in the radar returns over a range of viewing angles for this portion of the image. Detail 601 indicates an area where there are identified buildings that were damaged by the fire, and identified buildings that were not significantly damaged by the fire.

A shading scale for the image of figure 6 can be seen on the right-hand side of the image in figure 6. The shading scale illustrates a representation between the power level illustrated by a pixel of the image and the degree of shading that is applied to that pixel. In figure 6, the shading scale is monochromatic (i.e., is one provided in one colour). The shading scale may be greyscale. The scale is configured so that pixels with high decibel values of standard deviation are coloured brightly, and so that pixels with low decibel values of standard deviation are illustrated with dark shading. A minimum decibel value (e.g., 0 dB) may be appointed a pure black shading colour, and a maximum dB value (e.g., 5 dB) may be appointed a pure white shading colour. The shading scale may apply an increasingly darker shading a pixel as the decibel value of that pixel decreases from the maximum to the minimum decibel value. A similar shading scale may be applied to the frames of figure 5.

Figure 7 is a graph illustrating the distribution of standard deviation values that are calculated across the sets of data values of figure 6. Each standard deviation value corresponds to a pixel value of the image in figure 6. That is, each standard deviation value is a decibel value corresponding to a pixel in figure 6. The values of standard deviation illustrated in figure 6 are mapped against a histogram count which records the number of occurrences of each standard deviation value. The standard deviation is plotted along the x-axis of the graph of figure 7. The histogram count is plotted along the y-axis of the graph in figure 7. It is shown, from the example in figure 7, the mode standard deviation value for the geographical area that is imaged in figure 6 falls between 1 and 2dB. The substantive range of standard deviation values for the geographical area falls between 1 and 5dB. The number of occurrences of standard deviation values increases rapidly from 1 dB to the mode value, and then decreases from the mode to 6. The maximum number of pixels that share a standard deviation value is 100000.

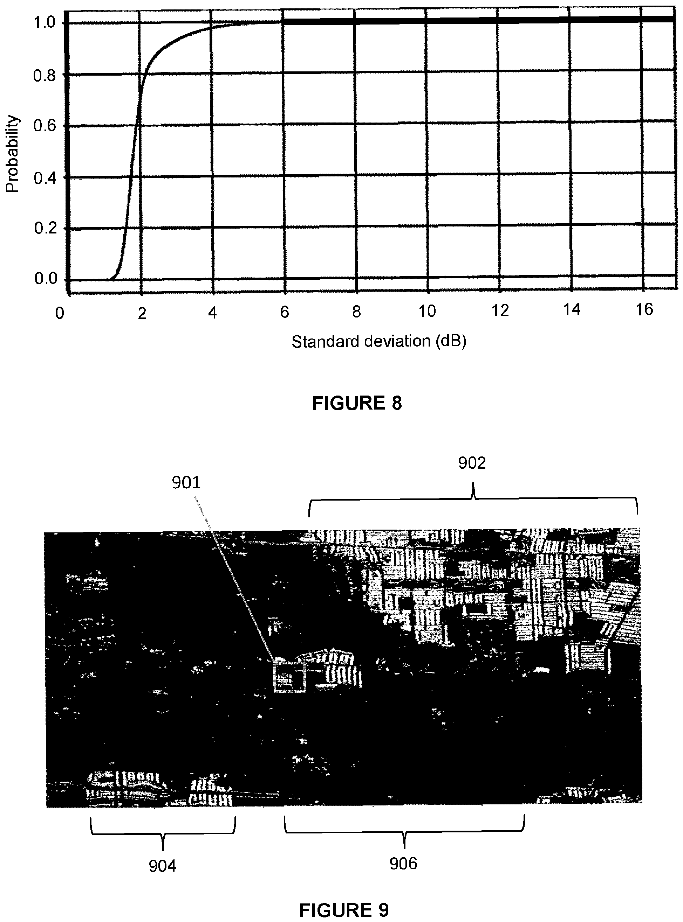

Figure 8 is graph illustrating the plot of a cumulative distribution function calculation that is performed for the standard deviation values of figure 7. In other words, in figure 8 the standard deviation values of figure 7 have been rearranged in order to determine the probability that a value x will be below a given standard deviation value. Thus, the graph of figure 8 plots probability against standard deviation. The standard deviation is plotted along the x-axis in figure 8. Probability is plotted along the y-axis in figure 8. Probability is measured as a non-integer division of 1 (e.g., 0.1, 0.2, 0.3). The plot of the cumulative distribution function, as illustrated in figure 8, provides a baseline from which a threshold can be determined.

From the plot of the cumulative distribution function that is described above, the threshold value for the sets of data values is determined. The threshold value may be calculated as described above with respect to figure 4. The threshold value is then used to determine whether each building in the geographical area is an isotropic or an anisotropic target. More specifically it is determined, for each pixel value of the image in figure 6, whether that pixel value is less than the threshold. If the pixel value is less than (or optionally less than or equal to) the threshold, then the pixel is determined to illustrate an isotropic property. Thus, if an identified building is comprised within that pixel, then the building is determined to be an isotropic target. Similarly, if the pixel value is greater than the threshold, then the pixel is determined to illustrate an anisotropic property. Thus, if an identified building is comprised within that pixel, then the building is determined to be an anisotropic target. For example, for this set of data, a threshold standard deviation value of 0.90 was chosen. This threshold value was found to be fairly accurate for differentiating between anisotropic and isotropic areas. The threshold value of 0.9 corresponds to a standard deviation of about 3 in figure 8, and means that only buildings with a high probability of being undamaged are identified as such, reducing the chance of classifying a damaged building as being undamaged. Depending on the purpose of the analysis being performed, the threshold may be adjusted up or down, depending on whether it is preferable to avoid false positives or to avoid false negatives, for example.

Figure 9 provides a pictorial representation of the output of step S306 of figure 3. Figure 9 may be referred to as a detection map. In figure 9, the image of figure 6 has been translated from a grayscale image into a binary black-and-white image by applying the thresholding method described above to each pixel of the image. This demonstrates that the output illustrated in figure 9 has simplified the imaging of figure 6 (and of figure 5) so that it categorically identifies pixels within its geographical area as either isotropic or anisotropic. Targets such as identified buildings can span one pixel, or multiple pixels. Anisotropic targets, which in this case are mainly undamaged buildings and other human-made structures, are highlighted in white because the majority of pixels for these targets will be white. Since a destroyed building is an isotropic target, it should not show up as white in the detection map of Figure 9. Instead, the majority of pixels corresponding to the isotropic target would show up as black.

In figure 9, locations of buildings (either damaged or undamaged) can be identified from imagery or from databases containing, for example, geographically located building footprints. An identified building can be classified as a damaged building if the pixel or pixels where it is located are all black or if the majority of pixels where they are located are black, the black colour indicating that it is behaving primarily as an isotropic target. Damaged buildings can be difficult to distinguish from other isotropic targets, such as vegetation or fields, which can be found in area 906. As will be described in more detail below, there are damaged buildings in the upper left corner of area 901 that can be classified as damaged buildings. Undamaged buildings can be classified as such if the pixels where they are located are white or if the majority of pixels where they are located are white, indicating that is behaving primarily as an anisotropic target. Anisotropic targets are illustrated in white in figure 9. Anisotropic targets can be seen, for example, in area 902 and 904 of figure 9.

In the examples described above, the classification of buildings as damaged or undamaged buildings is applied using pixel-based detection. Pixel-based detection is named as such because the classification of isotropy and anisotropy is applied for each pixel of the SAR acquisition individually. In an alternative method, the building classification method may use block-based detection. Block-based detection, as opposed to pixel-based detection, involves analysing image data in larger blocks or patches instead of analysing the data of individual pixels. This form of detection is performed by applying an average window to the standard deviation calculations. Applying the moving average window to the standard deviation calculations may be performed according to the following equation:

$$\sigma_{block}(i,j) = \sigma(i,j) * g(i,j)$$

An advantage of the use of block-based detection is that, by considering a group of pixels together, the classification method disclosed herein can better handle variations in lighting, texture, and noise, providing a more reliable representation of the geometry of a scene. Thus, the use of block-based detection can be advantageous in scenarios where objects of interest exhibit spatial coherence, as it helps mitigate the impact of isolated pixel outliers and enhances the overall accuracy of the detection process by incorporating contextual information within each block. Furthermore, when there is some knowledge of the location of an area of interest within an image (such as a building footprint), block-based detection may be used to limit the number of values that are analysed by capturing as much of the relevant signal data as possible and at the same time reducing the amount of noise that is analysed.

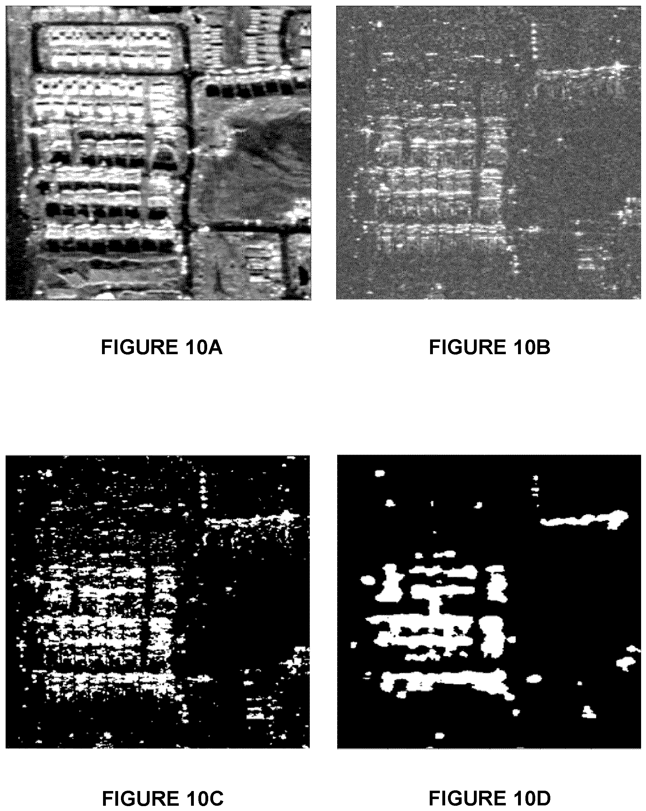

Figure 10A shows the mean return $\beta_0$ of a zoomed-in area of a target area in the image frames shown in Figure 5. In this area, houses that were fully destroyed by a wildfire are visible in the upper left, while houses in the bottom left of the image are undamaged. It is also interesting to note that the undamaged buildings can also be recognized by the shadow regions (dark areas) that are underneath each undamaged building in the image, indicating that the building has sufficient height to it to cast a radar shadow, whereas the buildings that have been burnt to the ground only have much smaller radar shadows, likely resulting from the relatively low foundation that remains standing.

Figure 10B is a zoomed-in image of area 601 of Figure 6, showing the standard deviation of the radar return across all of the data sets that are taken from different viewing angles. It can be clearly seen that the pixels corresponding to the undamaged buildings in the bottom left of the image have a higher standard deviation (they appear brighter) than those corresponding to the damaged buildings in the top left of the image.

Figure 10C is a zoomed-in anisotropic pixel detection map of the area 901 (same as area 601 of Figure 6) in the detection map shown in Figure 9. In this image a threshold has been applied to the estimator (standard deviation) in order to separate out anisotropic from isotropic areas. As suggested by Figure 10B, the pixels corresponding to undamaged buildings do indeed show up as white or mostly white, meaning they have been classified as anisotropic, and as such buildings associated with those pixels could be classified as undamaged. The areas of undamaged buildings are isotropic and show up as black or mostly black. Buildings in this area corresponding to these pixels would be classified as damaged.

Figure 10D shows an anisotropic block detection map of the same area generated by using an averaging window for block-based detection. Compared to figure 10C, it can be seen that using block-based detection results in some loss of resolution but reduces noise, speckle, and outliers, with the area of the undamaged buildings now being mostly white and the area with the damaged buildings being mostly black.

In the detection maps, damaged buildings cannot be easily separated from other terrain that exhibits isotropic behaviour (such as vegetation). To identify the location of buildings showing isotropic behaviour, information from other sources such as analysis of additional optical or SAR imagery (e.g., as in Figure 10A) and databases containing geographically located building footprints can be used. To help with visualization, a damaged building can be identified as such and highlighted in a pictorial representation by labelling it according to a first means. In other words, the identified building may be marked, or tagged, as a damaged building in a detection map, in the image showing standard deviation, or in one of the original images. The identification of a building as a damaged building in a pictorial representation allows for an easy visualisation of buildings that require disaster assistance, for example. Labelling the identified building according to a first means may comprise assigning a first colour to the identified building in the pictorial representation, which may comprise colouring the building, in the pictorial representation, with the first colour. For example, in a pictorial representation, red could be used to highlight a damaged building. In alternative examples, the colour may be an alternative colour such as blue, yellow or green. If an identified building is classified as an undamaged building, then that identified building may be labelled according to a second means. That is, the identified building may be identified, or marked, or tagged, as an undamaged building. The identification of a building as an undamaged building in a pictorial representation, similarly to the identification of a building as a damaged building, allows for an easy visualisation of buildings that do not need disaster assistance. Hence, the labelling is a useful tool for disaster response units.

Similarly, an identified building that is classified as an undamaged building (i.e., identified as an anisotropic target) may be identified as an undamaged building in the pictorial representation by labelling it according to a second means. In other words, the identified building may be marked, or tagged, as an undamaged building in figure 10C or other pictorial representations of the area. In figure 10C, labelling the identified building according to a second means may comprise assigning a second colour to the identified building in the pictorial representation. That is, labelling the identified building according to a second means may comprise colouring the building, in the pictorial representation, in a second colour. The second colour may be a contrasting colour to the first colour that is used to identify damaged buildings, so that the differentiation between damaged and undamaged buildings can clearly be seen from the pictorial representation. In figure 10A, the colour used to illustrate an undamaged damaged is white. In alternative examples, the colour may be an alternative colour that contrasts with the first colour. For example, if the first colour is red then the second colour may be green. If the first colour is blue then the second colour may be yellow.

In some examples, the isotropic targets illustrated in the geographical area of figure 10A are classified as damaged buildings after the detection map of figure 10C or 10D is generated. The image of figure 10C or 10D may be output by the method of either figure 3 or 4 as an indication of damaged buildings within an area affected by a disaster. The pictorial representation comprises, or captures, one or more buildings that are classified as damaged. As described above, the pictorial representation may also capture a geographical area that surrounds the building. This allows a contrast between the damage between the isotropic building and its anisotropic (or undamaged) surroundings to be clearly demonstrated.

The exemplary methods described above provide two types of classification as outputs. That is, the methods described above output a binary indication of whether or not a building is a damaged building. This is illustrated by steps S412 to S418 of figure 4, in which the answer to the question of whether the majority of standard deviation values corresponding to an identified building are less than a predetermined threshold is either yes or no. It is then determined that the building represented by those values either is or is not a damaged building. In alternative examples to those which are described above, there may be more than two types of classification that are provided as outputs. In one such example, there may be three classifications provided as output. The classifications may be that (1) the building is undamaged, (2) the building partially damaged or that the status of a building is indeterminate, and (3) that the building is completely destroyed. In this example, the determined values of step S306 may be compared to two threshold values. The first threshold value may correspond to the threshold described above. That is, the first threshold may be associated with a first level of isotropy and may enable the classification of whether the building is damaged (i.e., at least partially damaged) or undamaged. The second threshold may be calculated in substantially the same way as the first threshold. The second threshold may be a lower threshold than the first threshold. The second threshold may be associated with a second level of isotropy and may enable the classification of whether the building is partially damaged or completely destroyed.

The methods described above may be further developed by using a machine learning algorithm to identify buildings to be classified. More specifically, the methods described herein may use a clustering technique that can be implemented in radar signal processing for target detection. The use of a machine learning algorithm can rapidly accelerate and simplify the process of classifying damaged buildings as described herein. Two specific types of clustering techniques that may be advantageously used with the methods disclosed herein are K-means and fuzzy C-means clustering.

K-means clustering is an unsupervised machine learning algorithm that groups data points into K clusters based on their similarity. In the context of radar signal processing for target detection, K-means clustering can be used to group radar returns from different targets based on their scattering characteristics. The algorithm works by randomly selecting K initial cluster centroids, and then iteratively assigning each data point to the nearest centroid and updating the centroid based on the mean of the data points assigned to it. The algorithm continues to iterate until the centroids no longer move significantly or a maximum number of iterations is reached. Once the algorithm has converged, the data points are grouped into K clusters based on their assigned centroid. K-means clustering can be useful for target detection because it can help identify clusters of radar returns that correspond to different targets, which can then be further analysed to extract useful information about the targets.

Fuzzy C-means clustering is a variation of K-means clustering that allows data points to belong to multiple clusters with different degrees of membership. In the context of radar signal processing for target detection, fuzzy C-means clustering can be used to group radar returns from different targets based on their scattering characteristics, while also allowing for some degree of overlap between the clusters. The algorithm works by randomly selecting K initial cluster centroids and assigning each data point a membership degree for each cluster based on its distance from the centroid. The membership degrees are represented as fuzzy values between 0 and 1, where a value of 1 indicates that the data point belongs completely to the cluster, and a value of 0 indicates that it does not belong to the cluster at all. The algorithm then iteratively updates the cluster centroids and the membership degrees until a convergence criterion is met. Once the algorithm has converged, the data points are grouped into K clusters based on their membership degrees. Fuzzy C-means clustering can be useful for target detection because it can help identify clusters of radar returns that correspond to different targets, while also allowing for some degree of overlap between the clusters, which can be useful for detecting targets with complex scattering characteristics.

K-means and fuzzy C-means clustering are two machine learning techniques that can be implemented in radar signal processing for target detection. K-means clustering groups data points into K clusters based on their similarity, while fuzzy C-means clustering allows data points to belong to multiple clusters with different degrees of membership. Both techniques can be useful for identifying clusters of radar returns that correspond to different targets based on their scattering characteristics: here the anisotropic/isotropic characteristic.

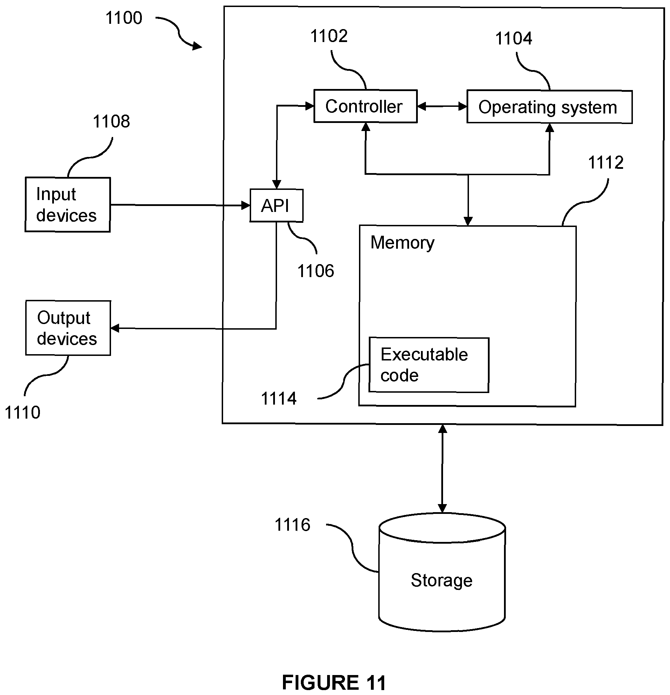

Figure 11 shows a computing system 1100, on which any of the above-described methods may be performed. In particular, the computing system 1100 may comprise a single computing device or components such as a laptop, tablet, desktop or other computing device. Alternatively functions of system 1100 may be distributed across multiple computing devices.

As described above with respect to figure 3, the computer system of figure 4 is configured to classify a building as a damaged building using synthetic aperture radar data from a space-borne satellite. The computer implemented system is therefore configured to receive a plurality of sets of data values, each data value in a set of data values representing a radiometric measurement of electromagnetic wave signals returning from at least one identified building, wherein each set of data values is obtained from a different viewing angle to the other sets of data values. The computer system is then configured to determine, using a mathematical estimator, a value indicative of a variation in the radiometric measurements across the plurality of sets of data values. The computer system is further configured to compare the determined value to a threshold value wherein, if the determined value are less than the threshold value, it is determined that the target is an isotropic target. Then, the computer system is configured to classify a building as a damaged building in dependence on determining that the building is an isotropic target.

In general, the steps of the methods described here will be performed on Earth, for example at a ground station or other facility on Earth in communication with a ground station.

The computing system 1100 may include one or more controllers such as controller 1102 that may be, for example, a central processing unit processor (CPU), a graphics processing unit (GPU) a chip or any suitable processor or computing or computational device such as an FPGA mentioned, an operating system 1104, a memory 1112 storing executable code (or computer readable code) 1114, storage 1116 which may be external to the system or embedded in memory 1112, one or more input devices 1108 and one or more output devices 1110. The computer readable code may be configured to cause the methods described above to be performed when the code is run.

One or more processors in one or more controllers such as controller 1102 may be configured to carry out any of the methods described here. For example, one or more processors within controller 1102 may be connected to memory 1112 storing software or instructions that, when executed by the one or more processors, cause the one or more processors to carry out a method according to some examples of the present disclosure. Controller 1102 or a central processing unit within controller 1102 may be configured, for example, using instructions stored in memory 1112, to perform the method as described above.

SAR data may be received at a processor comprised in the controller 1102 which then controls the subsequent operations of the above-described methods according to one or more commands or processes which may be stored as part of the executable code 1114.

Input devices 1108 may be or may include a mouse, a keyboard, a touch screen or pad or any suitable input device. It will be recognized that any suitable number of input devices may be operatively connected to computing system 1100. Output devices 1110 may include one or more displays, speakers and/or any other suitable output devices. It will be recognized that any suitable number of output devices may be operatively connected to computing system 1100. The input and output devices may for example be used to enable a user to select information, e.g., images and graphs as shown here, to be displayed.

In the examples described above, all or parts of the method may be performed by a server. The server may comprise a single server or network of servers. In some examples, the functionality of the server may be provided by a network of servers distributed across a geographical area, such as a worldwide distributed network of servers, and a user/operator of the method may be connected to an appropriate one of the network servers based upon, for example, a user location.

The examples described above are fully automatic. In some examples a user or operator of the system may manually instruct some steps of the method to be carried out.

In the described examples of the invention parts of the system may be implemented as a form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system, or any other suitable platform software, may be provided at the computing-based device to enable application software to be executed on the device.

Various functions described herein can be implemented in hardware, software, or any combination thereof. If implemented in software, the functions can be stored on or transmitted over as one or more instructions or code on any suitable computer-readable medium.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Although illustrated as a single system, it is to be understood that a computing device may be a distributed system. Thus, for instance, several devices may be in communication by way of a network connection and may collectively perform tasks described as being performed by the computing device. Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The method and systems described herein are advantageous as they provide a relatively fast and simple method for classifying a building as a damaged or an undamaged building. The determination may be made using multiple images from multiple acquisitions taken from different viewing angles, or from multiple images obtained during a single acquisition cycle by dividing the single acquisition into sub-apertures to form multiple images taken from different viewing angles. The speed and simplicity of this approach is useful in disaster situations as it enables the fast assessment of damage and subsequent relief efforts based on those advantages. Alternatively, method and systems described herein may be used by third parties such as insurance providers to remotely assess the structural damage to buildings and to calculate financial compensation for the owners of those buildings accordingly.

It will be understood that the benefits and advantages described above may relate to one example or may relate to several examples. The examples are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

It will be understood that the above description of a preferred example is given by way of example only and that various modifications may be made by those skilled in the art. What has been described above includes examples of one or more examples. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

**Claims**

1. A method of classifying a structure as a damaged structure using synthetic aperture radar data from one or more space-borne satellites, the method comprising:

   receiving a plurality of sets of data values, each set of data values representing a radiometric measurement of electromagnetic wave signals returning from an area of interest comprising at least one identified structure, wherein each set of data values is obtained from a different viewing angle to the other sets of data values, each set of data values comprising multiple data entries;
   determining, using a mathematical estimator, values indicative of a variation in the radiometric measurements for corresponding data entries across the plurality of sets of data values;
   comparing the determined values to a threshold value wherein, if a majority of determined values corresponding to a first identified structure are less than the threshold value, it is determined that the first identified structure represented by those determined values is an isotropic target; and
   classifying the first identified structure as a damaged structure in dependence on determining that the first identified structure is an isotropic target.

2. The method of claim 1, wherein the plurality of sets of data values are obtained in a single orbital pass of a single space-borne satellite.

3. The method of claim 2, wherein the single space-borne satellite is mechanically steered while the plurality of sets of data values are being obtained to remain pointing at the area of interest over an extended period of time, optionally wherein the extended period of time is 10 seconds or greater.

4. The method of claim 2 or claim 3, wherein the plurality of sets of data values are obtained by the single space-borne satellite in a single acquisition, which is subsequently divided into sub-apertures, each sub-aperture forming one set of the plurality of sets of data values.

5. The method of any preceding claim, wherein the structure is a building.

6. The method of any preceding claim wherein, if the majority of determined values corresponding to the first identified structure are greater than the threshold value, it is determined that the first identified structure represented by those determined values is an anisotropic target, and wherein the method further comprises classifying the first identified structure as an undamaged structure in dependence on determining that the first identified structure is an anisotropic target.

7. The method of any preceding claim, further comprising performing radiometric calibration on the received plurality of sets of data in order to obtain the radiometric measurements of electromagnetic wave signals from the plurality of sets of data.

8. The method of claim 7, further comprising performing filtering of the radiometric measurements of electromagnetic wave signals for each of the plurality of sets of data.

9. The method of any preceding claim, wherein using the mathematical estimator comprises using a statistical mathematical estimator that is selected from a group comprising standard deviation, a correlation coefficient or K-mean clustering.

10. The method of claim 9 wherein the statistical mathematical estimator is the standard deviation, and the method further comprises computing a cumulative distribution function of standard deviation values by applying a moving average filter to the cumulative distribution function according to the following equation:

$$\sigma_{block}(i,j) = \sigma(i,j) * g(i,j)$$

11. The method of any preceding claim, wherein the plurality of sets of data values comprise electromagnetic wave signals obtained using co-polarised radar transmission and reception, and optionally wherein the data values of the plurality of sets of data values are x-band frequency radar readings.

12. The method of any preceding claim, further comprising using a machine learning algorithm to identify a structure to be classified.

13. The method of any preceding claim, wherein the plurality of sets of data values comprises 12 or more sets of data values, 24 or more sets of data values or 32 or more sets of data values.

14. A computer system configured to classify a structure as a damaged structure using synthetic aperture radar data from one or more space-borne satellites, the computer implemented system being configured to:

receive a plurality of sets of data values, each set of data values representing a radiometric measurement of electromagnetic wave signals returning from an area of interest comprising at least one identified structure, wherein each set of data values is obtained from a different viewing angle to the other sets of data values, each set of data values comprising multiple data entries;

determine, using a mathematical estimator, values indicative of a variation in the radiometric measurements for corresponding data entries across the plurality of sets of data values;

compare the determined values to a threshold value wherein, if a majority of determined values corresponding to a first identified structure are less than the threshold value, it is determined that the first identified structure represented by those determined value is an isotropic target; and

classify the first identified structure as a damaged structure in dependence on determining that the first identified structure is an isotropic target.

15. Computer readable code configured to cause the method of any of claims 1 to 13 to be performed when the code is run.

102
108
106
$\theta_1$
110
104

**FIGURE 1A**

102a    102b    102c    107
102
108
104    $\theta_2$

**FIGURE 1B**

210a    210b    210c
$\theta_3$    $\theta_4$    $\theta_3$
202a
206a    206c
206b    208e
212    206d    202b

**FIGURE 2A**    **FIGURE 2B**

Receive a plurality of sets of data values, each set of data values representing a radiometric measurement of electromagnetic wave signals returning from an area comprising at least one identified structure, wherein each set of data values is obtained from a different viewing angle to the other sets of data values, each set of data values comprising multiple data entries — S302

Determine, using a mathematical estimator, values indicative of a variation in the radiometric measurements for corresponding data entries across the plurality of sets of data values — S304

Compare the determined values to a threshold value wherein, if a majority of determined values corresponding to a first identified structure are less than the threshold value, it is determined that the first identified structure represented by those determined values is an isotropic target — S306

Classify the first identified structure as a damaged structure in dependence on determining that the first identified structure is an isotropic target — S308

**FIGURE 3**

S402

Receive a plurality of sets of data values

S404

Calculate the standard deviation of radiometric measurements for a corresponding data entries across the plurality of sets of data values

S406

Compute the cumulative distribution function of the standard deviation values

S408

Calculate the threshold value from the cumulative distribution function

For each identified building: are the majority of standard deviations corresponding to the identified building less than the predetermined threshold?

S410

YES

NO

The building is isotropic

S412

The building is anisotropic

S416

Classify the building as damaged

S414

Classify the building as undamaged

S418

**FIGURE 4**

FIGURE 5

601

**FIGURE 6**

Standard deviation (dB)

**FIGURE 7**

FIGURE 8

FIGURE 9

FIGURE 10A

FIGURE 10B

FIGURE 10C

FIGURE 10D

1100

1102

1104

1108

Controller

Operating system

Input
devices

API

1112

Memory

1106

Output
devices

Executable
code

1114

1110

1116

Storage

FIGURE 11

Europäisches
Patentamt

European
Patent Office

Office européen
des brevets

**EUROPEAN SEARCH REPORT**

| Application Number |
| --- |
| EP 23 22 0152 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | TIMO BALZ: "Building-damage detection using post-seismic high-resolution SAR satellite data", INTERNATIONAL JOURNAL OF REMOTE SENSING, vol. 31, no. 13, 16 July 2010 (2010-07-16), pages 3369-3391, XP093162884, GB ISSN: 0143-1161, DOI: 10.1080/01431161003727671 | 1,5-15 | INV. G01S13/90 G01S7/41 |
| A | * the whole document * | 2-4 | |
| A | PIRRONE DAVIDE ET AL: "An Approach to Unsupervised Detection of Fully and Partially Destroyed Buildings in Multitemporal VHR SAR Images", IEEE JOURNAL OF SELECTED TOPICS IN APPLIED EARTH OBSERVATIONS AND REMOTE SENSING, IEEE, USA, vol. 13, 25 September 2020 (2020-09-25), pages 5938-5953, XP011814853, ISSN: 1939-1404, DOI: 10.1109/JSTARS.2020.3026838 [retrieved on 2020-10-12] * sec. II.B * | 1-15 | |
| | | | TECHNICAL FIELDS SEARCHED (IPC) |
| | | | G01S |
| A | MARIN CARLO ET AL: "Building Change Detection in Multitemporal Very High Resolution SAR Images", IEEE TRANSACTIONS ON GEOSCIENCE AND REMOTE SENSING, IEEE, USA, vol. 53, no. 5, 1 May 2015 (2015-05-01), pages 2664-2682, XP011569110, ISSN: 0196-2892, DOI: 10.1109/TGRS.2014.2363548 [retrieved on 2015-01-07] * the whole document * | 1-15 | |

-/--

The present search report has been drawn up for all claims

| Place of search | Date of completion of the search | Examiner |
| --- | --- | --- |
| Munich | 16 May 2024 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 23 22 0152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIXIA GONG: "Earthquake-Induced Building Damage Detection with Post-Event Sub-Meter VHR TerraSAR-X Staring Spotlight Imagery", REMOTE SENSING, vol. 8, no. 11, 27 October 2016 (2016-10-27), page 887, XP093163300, CH ISSN: 2072-4292, DOI: 10.3390/rs8110887 * the whole document * | 1-15 | |
| A | GE PINGLAN ET AL: "Building Damage Assessment Using Intensity SAR Data with Different Incidence Angles and Longtime Interval", JOURNAL OF DISASTER RESEARCH, vol. 14, no. 3, 28 March 2019 (2019-03-28), pages 456-465, XP093106863, ISSN: 1881-2473, DOI: 10.20965/jdr.2019.p0456 * the whole document * | 1-15 | |
| A | CN 108 416 760 B (INST REMOTE SENSING & DIGITAL EARTH CAS) 1 October 2021 (2021-10-01) * the whole document * | 1-15 | **TECHNICAL FIELDS SEARCHED (IPC)** |
| A | SUN WEIDONG ET AL: "Building Collapse Assessment in Urban Areas Using Texture Information From Postevent SAR Data", IEEE JOURNAL OF SELECTED TOPICS IN APPLIED EARTH OBSERVATIONS AND REMOTE SENSING, IEEE, USA, vol. 9, no. 8, 1 August 2016 (2016-08-01), pages 3792-3808, XP011621412, ISSN: 1939-1404, DOI: 10.1109/JSTARS.2016.2580610 [retrieved on 2016-08-30] * the whole document * | 1-15 | |

The present search report has been drawn up for all claims

| Place of search | Date of completion of the search | Examiner |
|---|---|---|
| Munich | 16 May 2024 | Rudolf, Hans |

**EP 4 575 576 A1**

## ANNEX TO THE EUROPEAN SEARCH REPORT
## ON EUROPEAN PATENT APPLICATION NO.

**EP 23 22 0152**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-05-2024**

| Patent document cited in search report | Publication date | Patent family member(s) | Publication date |
|---|---|---|---|
| CN 108416760 B | 01-10-2021 | NONE | |

EPO FORM P0459

For more details about this annex : see Official Journal of the European Patent Office, No. 12/82

34